# EUROPÄISCHE PATENTANMELDUNG

(11) **EP 4 576 563 A1**
(43) Veröffentlichungstag der Anmeldung: **25.06.2025**
(21) Anmeldenummer: 24213556.4
(22) Anmeldetag: 18.11.2024
(51) Int. Cl.: H02S 20/10, F24S 25/12

(54) **PHOTOVOLTAIKGESTELL, PHOTOVOLTAIKANLAGE**

(30) Priorität: 17.11.2023 DE 102023132121
(71) Anmelder: Zäh, Stephan, 91802 Meinheim (DE)
(72) Erfinder: ZÄH, Stephan, 91802 Meinheim (DE)
(74) Vertreter: Manitz Finsterwald Patent- und Rechtsanwaltspartnerschaft mbB

(57) **Zusammenfassung**

Ein Photovoltaikgestell (1) hat vier in einem Viereck aufzustellenden vertikal verlaufende ersten Pfosten (10-1), deren oberes Ende jeweils mindestens drei oder dreieinhalb Meter über dem Erdboden liegt, zwei erste Längspfetten (11-1), die sich jeweils zwischen den die Viereckseiten absteckenden ersten Pfosten (10-1) erstrecken sollen und mit ihren jeweiligen Endbereichen derart an ihnen festklemmbar sind, dass die ersten Pfosten (10-1) und die ersten Längspfetten (11-1) jeweils einen Überstand haben, pro erstem Pfosten (10-1) je eine an dessen Überstand befestigbare erste Schrägpfette (12-1), die von dort schräg nach unten auf den gegenüberliegenden ersten Pfosten (10-1) und die jeweilige Längspfette (11-1) zu laufen kann und daran anklemmbar ist, und zwei Paare von ersten Querpfetten (13-1), von denen je zwei eines Paares mit ihren zwei Endbereichen an je zwei sich längs der zweiten Viereckseite betrachtet gegenüberliegenden ersten Schrägpfetten (12-1) so anklemmbar sind, dass sie an beiden Enden einen Überstand über die jeweilige Schrägpfette (12-1) haben und voneinander in Richtung der jeweiligen ersten Schrägpfetten (12-1) um mindestens 50 oder 70% der Länge der jeweiligen ersten Schrägpfette (12-1) beabstandet sind.

## Beschreibung

Die Erfindung betrifft ein Photovoltaikgestell und eine Photovoltaikanlage mit einem solchen Gestell.

Photovoltaikanlagen nehmen in zunehmendem Maße Freiflächen ein. Dabei werden Photovoltaiktafeln, die aus einzelnen Photovoltaikmodulen, auch als PV-Module angesprochen, zusammengesetzt sein können, mit rechteckigem Grundriss, deren Seitenlängen jeweils einige Meter sein können, üblicherweise schräg und nach Süden gerichtet aufgestellt. Die Module solcher Anlagen zusammen nehmen dann üblicherweise mehrere Hektar Bodenfläche ein. Der Nachteil herkömmlicher Photovoltaikanlagen ist es, dass die Freifläche nicht weiter genutzt werden kann.

Es entsteht deshalb der Wunsch, sogenannte "Agro-PV-Anlagen" oder auch "Agri-PV-Anlagen" zu bauen, bei denen die landwirtschaftliche Nutzung des Bodens mit photovoltaischer Nutzung der Fläche kombiniert wird. "PV" steht für "Photovoltaik". Die Photovoltaikmodule für sich alleine können in solchen Anlagen qualitativ die gleichen sein wie diejenigen herkömmlicher Photovoltaikanlagen. Gleichwohl sind dann markante weitere Randbedingungen zu beachten:
Die Fläche unter den PV-Modulen muss mit landwirtschaftlichen Fahrzeugen und Gerätschaften bewirtschaftbar sein. Dies erfordert unter den Photovoltaikmodulen eine gewisse Durchfahrtshöhe und fordert von den die Aufständerung nach oben haltenden Pfosten Mindestabstände, um die Durchfahrt der Maschinen und Gerätschaften zwischen ihnen zu ermöglichen. Außerdem werden die einzelnen Module mit Abstand voneinander montiert, um Licht- und Regenwassereinfall über die Fläche zu vergleichmäßigen, so dass auch die landwirtschaftlichen Bedingungen unter der PV-Anlage möglichst homogen sind.

Insgesamt ist die Aufständerung einer solchen Agro-PV-Anlage deutlich aufwändiger als diejenige herkömmlicher Anlagen, und es gibt bisher keine befriedigende Lösung dafür. Bekannte Aufständerungen erlauben nur wenig zufriedenstellende Durchfahrtsmaße für die landwirtschaftlichen Maschinen und sind in der Montage aufwändig.

Aufgabe der Erfindung ist es, ein Photovoltaikgestell anzugeben, das bei für die landwirtschaftliche Nutzung befriedigenden Abmessungen effizient aufbaubar und dauerstabil ist.

Diese Aufgabe wird mit den Merkmalen des Anspruchs 1 gelöst.

Ein Photovoltaikgestell hat vier in einem Viereck aufzustellenden vertikal verlaufende erste Pfosten, deren oberes Ende jeweils mindestens drei oder dreieinhalb Meter über dem Erdboden liegt, wobei das Viereck zwei gegenüberliegende erste Viereckseiten mit ersten Längen von jeweils über vier oder 5 oder sechs Metern hat, wobei die andern zwei Viereckseiten zweite Viereckseiten mit zweiten Längen von jeweils über zwei oder drei oder vier Metern sind, zwei erste Längspfetten, die sich jeweils zwischen den die ersten Viereckseiten absteckenden ersten Pfosten erstrecken sollen und mit ihren jeweiligen Endbereichen derart an ihnen festklemmbar sind, dass die ersten Pfosten nach oben über die jeweilige Längspfette hinaus einen ersten Überstand von mindestens 20 oder 30 oder 40 cm aufweisen können und dass die Enden der ersten Längspfetten über den jeweiligen ersten Pfosten hinaus einen zweiten Überstand von mindestens 10 cm haben können, pro erstem Pfosten je eine daran befestigbare erste Schrägpfette, die mit ihrem jeweiligen oberen Ende am ersten Überstand des jeweiligen ersten Pfostens befestigbar ist und von dort schräg nach unten auf den gegenüberliegenden ersten Pfosten und die jeweilige Längspfette zu laufen kann und mit ihren unteren Enden daran anklemmbar ist, wobei die Anklemmungen zweier gegenüberliegender erster Schrägpfetten an der Längspfette einen Abstand haben können, der über 10 oder 20 oder 30 cm liegen kann und der unter 60 oder 40 cm liegen kann, und zwei Paare von ersten Querpfetten, von denen je zwei eines Paares mit ihren zwei Endbereichen an je zwei sich längs der zweiten Viereckseite betrachtet gegenüberliegenden ersten Schrägpfetten so anklemmbar sind, dass sie an beiden Enden einen dritten Überstand von jeweils mindestens 10 oder 20 cm über die jeweilige erste Schrägpfette haben können und voneinander in Richtung der jeweiligen ersten Schrägpfetten um mindestens 50 oder 70% der Länge der jeweiligen ersten Schrägpfette beabstandet sind. Die Länge der ersten Viereckseiten kann unter 10 oder 8 Metern liegen. Die Länge der zweiten Viereckseiten kann unter 9 oder 7 Metern liegen.

Es ist so eine Aufständerung für ein Feld einer Agro-PV-Anlage geschaffen. Die Durchfahrtshöhe für landwirtschaftliche Maschinen wird durch die Mindesthöhe der Längspfetten vorgegeben und liegt über 3 m. Regelmäßig kann sie bei 3,50 m oder mehr liegen. Die Durchfahrtsbreiten entsprechen den Seitenlängen der Aufstellung der Pfosten und können regelmäßig über 5 oder 6 oder 7 m liegen, so dass die Flächen effizient bewirtschaftbar sind. Oben ist ein Photovoltaikgestell für ein sogenanntes "Feld" im Sinne dieser Anmeldung beschrieben, das dementsprechend eine Fläche entsprechend den Seitenlängen des von den Pfosten abgesteckten Vierecks einnehmen kann. Die Fläche kann über 30 oder 40 oder 50 m² liegen. Sie kann unter 80 oder 60 oder 50 m² liegen. In einem Feld sind einander gegenüberliegende Photovoltaikmodule in entgegengesetzte Richtungen geneigt. Es entstehen so first- und traufenartige Strukturen, die sich abwechseln. Die Firstbereiche liegen auf Verbindungslinien von Pfosten. Die Traufenbereiche liegen auf Linien zwischen den Pfosten. Mit der sich abwechselnden Neigung wird die Lichtenergienutzung bei niedrigen Sonnenständen verbessert, da keine kulissenartigen Schlitze entstehen, in denen Lichtleistung verlorengeht.

Die Struktur eines Feldes wie oben beschrieben kann in die zwei Flächendimensionen wiederholt werden. In First- bzw. Traufrichtung bzw. in Richtung der zweiten Viereckseite vervielfacht kann ein Photovoltaikgestell wie oben zusätzlich zwei zweite Pfosten aufweisen, die voneinander in Richtung der ersten Viereckseiten gemäß einer ersten Länge beabstandet und von zwei in Richtung der ersten Viereckseiten beabstandeten ersten oder zweiten Pfosten in Richtung der zweiten Viereckseiten gemäß einer zweiten Länge beabstandet so aufstellbar sind, dass ihr oberes Ende jeweils mindestens drei oder dreieinhalb Meter über dem Erdboden liegt, eine an die zweiten Pfosten so anklemmbare zweiten Längspfette, dass die zweiten Pfosten nach oben über die zweite Längspfette hinaus einen ersten Überstand von mindestens 20 oder 30 oder 40 cm aufweisen können und dass die Enden der zweiten Längspfette über den jeweiligen zweiten Pfosten hinaus einen zweiten Überstand von mindestens 10 cm haben können, je eine mit ihrem jeweiligen oberen Ende am Überstand eines zweiten Pfostens befestigbare zweite Schrägpfette, die von dort schräg nach unten auf den gegenüberliegenden zweiten Pfosten und die jeweilige Längspfette zu laufen kann und mit ihren unteren Enden daran anklemmbar ist, wobei die Anklemmungen zweier längs der zweiten Längspfette gegenüberliegender Schrägpfetten einen Abstand haben können, der über 10 oder 20 oder 30 cm liegen kann und der unter 60 oder 40 cm liegen kann, und zwei Paare von zweiten Querpfetten, von denen je zwei eines Paares mit ihren zwei Enden an je zwei sich längs der zweiten Viereckseite betrachtet gegenüberliegenden Paaren aus ersten und/oder zweiten Schrägpfette so anklemmbar sind, dass sie an beiden Enden einen dritten Überstand von jeweils mindestens 10 oder 20 cm über die jeweilige erste Schrägpfette haben können und voneinander in Richtung der jeweiligen ersten Schrägpfetten um mindestens 50 oder 70% der Länge der ersten oder zweiten Schrägpfette beabstandet sind.

Es können so eine beliebige Anzahl von Feldern aneinandergesetzt werden, so dass lange First- bzw. Traufenstrukturen entstehen. Die Unterscheidung zwischen jeweils ersten und zweiten Pfosten und Pfetten dient der linguistischen Klärung und soll nicht sagen, dass notwendigerweise die korrespondierenden ersten und zweiten Strukturmerkmale zueinander unterschiedlich sind.

Quer zu First- bzw. Traufrichtung bzw. in Richtung der ersten Viereckseite vervielfacht kann ein Photovoltaikgestell wie oben zusätzlich zwei dritte Pfosten aufweisen, die voneinander in Richtung der zweiten Viereckseiten gemäß einer zweiten Länge beabstandet und von zwei in Richtung der zweiten Viereckseiten beabstandeten ersten oder zweiten oder dritten Pfosten in Richtung der ersten Viereckseiten gemäß einer ersten Länge beabstandet so aufstellbar sind, dass ihr oberes Ende jeweils mindestens drei oder dreieinhalb Meter über dem Erdboden liegt, je eine an einen dritten Pfosten so anklemmbare dritte Längspfette, dass die dritten Pfosten nach oben über die dritte Längspfette hinaus einen ersten Überstand von mindestens 20 oder 30 oder 40 cm aufweisen können und dass das jeweils angeklemmte Ende der dritten Längspfette über den jeweiligen dritten Pfosten hinaus einen zweiten Überstand von mindestens 10 cm haben kann, wobei das jeweils andere Enden der dritten Längspfette an einem längs der ersten Viereckseite beabstandet gegenüberliegenden Pfosten so anklemmbar ist, dass Pfosten und Längspfette einen ersten bzw. zweiten Überstand aufweisen, je einer am jeweiligen ersten Überstand jedes dritten Pfostens und des am längs der dritten Längspfette gegenüberliegenden Pfosten befestigbaren dritten Schrägpfette, die vom ersten Überstand des jeweiligen Pfostens schräg nach unten auf den gegenüberliegenden Pfosten und die jeweilige dritte Längspfette zu laufen können und mit ihren unteren Enden daran anklemmbar sind, wobei die Anklemmungen zweier gegenüberliegender dritter Schrägpfetten an der dritten Längspfette einen Abstand haben können, der über 10 oder 20 oder 30 cm liegen kann und der unter 60 oder 40 oder 60 cm liegen kann, und zwei Paare von dritten Querpfetten, von denen je zwei eines Paares mit ihren zwei Enden an je zwei sich längs der zweiten Viereckseite betrachtet gegenüberliegenden Paaren dritter Schrägpfette so anklemmbar sind, dass sie an beiden Enden einen dritten Überstand von jeweils mindestens 10 oder 20 cm über die jeweilige dritte Schrägpfette haben können und voneinander in Richtung der jeweiligen dritten Schrägpfetten um mindestens 50 oder 70% der Länge der jeweiligen dritten Schrägpfette beabstandet sind.

Durch wiederholtes Anbauen von Feldern quer zu First- bzw. Traufrichtungen, also in Richtung der ersten Viereckseite, entstehen abwechselnd Firste und Traufen. Es kann so eine Fläche vollständig überdeckt werden. Abermals dient die Unterscheidung nach ersten, zweiten und dritten Strukturmerkmalen der linguistischen Unterscheidung der momentan jeweils angesprochenen Strukturen. Es soll damit nicht gesagt werden, dass entsprechende Gegenstände zueinander unterschiedlich wären. Soweit die linguistische Differenzierung nicht genannt ist, sind alle jeweils angesprochenen Strukturmerkmale gemeint.

Ein Photovoltaikgestell wie oben kann auf jedem Paar von Querpfetten quer dazu ein oder mehrere Paare von Modulpfetten so anklemmbar aufweisen, dass die Modulpfetten in Richtung der ersten Querpfetten voneinander beabstandet sind. Die Modulpfetten können die eigentlichen Träger der Photovoltaikmodule sein, indem auf je einem Paar von Modulpfetten ein oder mehrere Photovoltaikmodule, auch als Photovoltaikpaneele bezeichnet, angeklemmt werden. Die Paneele können längs der Modulpfetten beabstandet voneinander angeklemmt werden, um zur Vergleichmäßigung der landwirtschaftlichen Bedingungen unter der PV-Anlage Licht- und Wasserdurchlässe zu schaffen.

Bei einem Photovoltaikgestell wie oben können die Pfosten in einem in Draufsicht rechtwinkligen Raster aufstellbar sein, in dem die Rechtecke Seitenlängen der ersten Länge und der zweiten Länge haben. Ein in Draufsicht rechtwinkliges Raster entspricht einem realen Raster auf dem Boden, wenn der Boden eben horizontal läuft. Wenn der Boden dagegen geneigt ist, vergrößern sich die Seitenlängen des Rechtecks gemäß 1/cos( ϕ), wobei ϕ der Neigungswinkel des Bodens in die betrachtete Richtung ist. Bei einer Hangneigung von 10° verlängern sich die Kantenlängen um ca. 1,5%, was auf einen Abstand in Draufsicht von beispielsweise 7,50 m etwa 12 cm Längenunterschied ausmacht. Bei einer vergleichsweise starken Steigung von 20° sind es schon 6,4% entsprechend fast 50 cm auf eine plane Länge von 7,50 m. Indem Längspfetten und Querpfetten längsvariabel bzw. anklemmbar ausgelegt sind, können mit ihnen ohne Aufwand flexibel unterschiedliche Längen in der Aufstellung abgebildet werden.

Sich ändernde Hangneigungen können durch jeweils konstant über den Erdboden hinausragende Pfosten nachgezeichnet werden. Windschiefe Verhältnisse innerhalb eines Feldes können durch flexible Anklemmungen von Modulen auf Modulpfetten oder von Modulpfetten auf Querpfetten, ggf. mit Abstandshaltern, aufgefangen werden.

Bei einem Photovoltaikgestell wie oben können die Pfosten mit einer Länge von mindestens 50 oder 100 oder 150 cm in den Boden einrammbar sein. Die Pfosten können so stabil ausgebildet sein, dass sie den mechanischen Beanspruchungen durch Einrammen standhalten können. Dies geht davon aus, dass der Boden im Wesentlichen lose ist, was für Böden, bei denen Agro-PV-Anlagen gebaut werden sollen, gerechtfertigt ist. Je nach Bodenqualität sind unterschiedliche Tiefen notwendig, um den zu erwartenden Querlasten durch Wind und allgemein langdauernd Schwerkraft zuverlässig standhalten zu können. Die Pfosten sind dann so gestaltet, dass ihre Gesamtlänge vor dem Verbau der Summe aus Einschlagtiefe und gewünschter Höhe der Spitze über dem Boden entspricht. Wenn die Pfosten beispielsweise 1,50 m in den Boden eingerammt werden sollen und bis 4 m über den Boden ragen sollen, haben sie eine Gesamtlänge von 5,50 m.

Bei einem Photovoltaikgestell wie oben kann die Dimensionierung insbesondere der Schrägpfetten so sein, dass über ihnen in ihrem Bereich zwischen dem ersten Überstand und ihrer Anklemmung an der jeweiligen Längspfette zwei oder drei oder mehr Photovoltaikmodule mit einem Abstand voneinander in Richtung der Schrägpfette von mehr als zwei oder 5 oder 10 Zentimetern anklemmbar sind. Die Länge einer Schrägpfette kann mehr als 35 oder 40 oder 45% des Abstands zwischen zwei gegenüberliegenden Pfosten sein. Sie kann weniger als 50% oder 47% dieses Abstands sein.

Die Beabstandung von Photovoltaikpaneelen längs der Richtung einer Schrägpfette führt dazu, dass zwischen ihnen Abstände entstehen, die den Durchtritt von Regenwasser und Sonnenlicht erlauben. Dies führt dazu, dass die landwirtschaftlichen Verhältnisse auf dem Boden unter der Photovoltaikanlage gleichmäßiger sind als wenn Wasser nur in den Traufbereichen des Gesamtaufbaus niedergehen würde. Sinngemäß das Gleiche gilt hinsichtlich des einfallenden Sonnenlichts.

Bei einem Photovoltaikgestell wie oben kann die Dimensionierung insbesondere der Querpfetten so sein, dass über ihnen in ihrem Bereich zwischen den sie tragenden Schrägpfetten zwei oder drei oder mehr Photovoltaikmodule mit einem Abstand voneinander in Richtung der Querpfette von mehr als zwei oder 5 oder 10 Zentimetern anklemmbar sind. Auch die Beabstandung der Photovoltaikpaneele in Richtung der Querpfetten sorgt für erhöhten Lichteinlass und somit für landwirtschaftlich günstigere Verhältnisse.

Die Dimensionierung der Schlitze zwischen Photovoltaikpaneelen kann so sein, dass insgesamt mehr als 80 oder 85% der Fläche eines Feldes von Photovoltaikpaneelen belegt sind. Sie kann so sein, dass weniger als 95% und weniger als 90% von Photovoltaikpaneelen belegt sind.

Die Dimensionierungen der Pfosten und Pfetten sind allgemein so, dass sie den zu erwartenden maximalen Lasten standhalten. Die Lasten können dabei insbesondere Windlasten bei Starkwind sein oder hohe Schneelasten. Wind kann dabei tendenziell zu Querkräften, Scherkräften und Biegemomenten an der Gründung führen, denen der Gesamtaufbau standhalten muss. Schneelasten führen zu Gewichtskräften nach unten, die auch bei großen Schneehöhen aufgefangen werden müssen.

Bei einem Photovoltaikgestell wie oben können die Pfosten offene Viereckprofile vorzugsweise aus Metall mit einem fehlenden Eckbereich aufweisen, wobei das Viereck ein Rechteck oder Quadrat mit Seitenlänge von mehr als 5 oder sieben oder 10 oder 15 Zentimetern und vorzugsweise weniger als 20 oder 15 Zentimetern Seitenlänge sein kann, und wobei das Profil an einem Ende an gegenüberliegenden Seiten Bohrungen für das Anbringen von Längspfetten und Schrägpfetten aufweisen kann, wobei die Bohrungen einem Raster folgend in Längsrichtung des Pfostens beabstandet vorgesehen sein können.

Die Dimensionierung des Pfostenprofils erfolgt im Hinblick auf die zu erwartenden Längs- und Querkräfte und auch im Hinblick auf effiziente Materialnutzung und Einfachheit der Benutzung vor allem bei der Montage. Das Pfostenprofil kann aus einem metallischen Material gebildet sein, etwa Aluminium oder verzinktem Eisen oder Stahl. Das Weglassen eines Eckbereichs führt zu Materialersparnis und erlaubt im Übrigen eine einfachere Montage, da das Innere des Profils einfach zugänglich ist. Das am Verbau obere Ende eines Pfostens kann mit im Verbau vertikal liegenden Lochreihen mit regelmäßiger Beabstandung versehen sein, die das Anbringen von Montagematerial erlauben, was weiter unten erläutert wird.

Bei einem Photovoltaikgestell wie oben kann eine Längspfette und/oder eine Schrägpfette ein Rechteckprofil mit einer Breite und einer größeren Höhe sein, wobei die Breite über zwei oder 5 oder sieben Zentimetern liegen kann und wobei die Höhe mehr als das 1.2- oder 1.5- oder 2-fache der Breite sein kann. Auch die Profile einer Längspfette und einer Schrägpfette können aus Aluminium oder verzinktem Eisen oder Stahl gebaut sein bzw. diese Materialien aufweisen.

Längspfetten können eine freie Länge zwischen den Auflagepunkten von beispielsweise bis zu 8 m haben. Bei hohen Schneelasten können dann Biegekräfte in der Mitte der Längspfette vergleichsweise groß werden. Die Dimensionierung ist so gewählt, dass vernünftigerweise zu erwartenden Lasten zuverlässig standgehalten werden kann. Ein insoweit ausdrücklich betontes Merkmal von Längspfetten ist es, dass sie insbesondere im mittleren Bereich keine die Struktur schwächenden Bohrungen oder Schlitze aufweisen, sondern dass nur Anklemmungen erfolgen, also die Längspfette an einem Pfosten angeklemmt wird und das untere Ende einer Schrägpfette etwa an die Mitte einer Längspfette angeklemmt wird. Das Profil einer Längspfette ist dadurch strukturell nicht geschwächt.

Bei einem Photovoltaikgestell wie oben kann eine Querpfette ein eckiges C-Profil oder ein geschlossenes Rechteckprofil aufweisen. In einer anderen Ausführungsform kann eine Querpfette zwei beabstandete und untereinander vorzugsweise mehrfach vorzugsweise diagonal verstrebte Leisten aufweisen, wobei der Abstand der Leisten voneinander der Höhe des Profils einer Schrägpfette entspricht und der von Verstrebungen eingenommene Bereich der Querpfette kleiner ist als der Abstand zweier benachbarter Schrägpfetten.

Ähnlich den Längspfetten haben die Querpfetten eine vergleichsweise große Länge von beispielsweise über 6 oder 7 m, wobei jedoch zu beachten ist, dass bei flächendeckendem Verbau pro Längspfette mehrere, z. B. vier Querpfetten vorgesehen sind, so dass die zu erwartende Last auf einer Querpfette Bruchteil, z. B. ein Viertel der Last auf einer Längspfette sein wird. Der Aufbau mit vorzugsweise diagonal verstrebten, parallelen Leisten führt dazu, dass sich eine einfache Montage ergibt und im Vergleich zu Vollprofilen auch Material gespart werden kann. Eine Querpfette kann eine Länge haben, die länger ist als der Abstand zwischen den in ihrer Verbaurichtung beabstandeten Pfosten. Sie kann dann in geeigneter Weise auf Schrägpfetten aufgelegt werden. Oder sie kann eine Länge haben, die etwas kürzer ist als der Abstand zwischen den in ihrer Verbaurichtung beabstandeten Pfosten. Sie kann dann in geeigneter Weise zwischen entsprechend benachbarten Schrägpfetten eingehängt und gehalten werden.

Ein Photovoltaikgestell wie oben kann eine Schraubenleiste aufweisen, von der in deren Längsrichtung beabstandet zwei mindestens an ihrem Ende mit Gewinde versehene Stifte abstehen, deren Abstand größer als die Höhe des Profils einer Längspfette und deren Länge länger als die Breite des Profils einer Längspfette ist und die von innen in das Profil eines Pfostens so einlegbar ist, dass die Stifte durch die im Raster vorgesehenen Bohrungen ragen können. Die Schraubenleiste kann einen weiter beabstandeten dritten mit mindestens an seinem Ende mit einem Gewinde versehenen Stift aufweisen, dessen Länge länger ist als die Breite des Profils einer Schrägpfette und der ebenfalls durch eine im Raster vorgesehenen Bohrung eines Pfostens ragen kann.

Die Schraubenleiste mit den abstehenden Stiften ist Montagematerial. Die abstehenden Stifte können einerseits zwischen sich die Höhe einer Längspfette aufnehmen und an sich ein Haltekörper anschraubbar halten, so dass sie die Anklemmung einer Längspfette an einem Pfosten erlauben. Außerdem kann ein Stift vorgesehen sein, der weiter oben im Verbau das Aufschieben und Anschrauben einer Schrägpfette erlaubt. Im Verbau ist die Schraubenleiste innen in das Profil des Pfostens so eingelegt, dass die Stifte durch Bohrungen nach außen ragen, um so seitlich am Pfosten die Längspfette anklemmen zu können und die Schrägpfette anbringen zu können, etwa durch eine Schraubverbindung.

Die Schraubenleiste kann darüber hinaus weitere kleinere Stifte aufweisen, die ebenfalls durch Öffnungen im Profil des Pfostens ragen und unmittelbar angeschraubt werden können. Dies dient einer weiteren Stabilisierung der Anbringung des Gesamtaufbaus. Die Beabstandung aller Stifte einer Schraubenleiste voneinander kann längs eines Rasters erfolgen, dessen schrittweise beispielsweise über 4 oder 6 cm liegen kann. Sie kann unter 10 oder 8 cm liegen. Die Bohrungen am oberen Ende des Pfostens können in ihrem Abstand dem gleichen Raster folgen. Es kann dann die Schraubenleiste in das vorgegebene Bohrungsraster von innen nach außen ragend eingelegt werden. Die Reihe der Bohrungen kann länger sein als die Länge der Schraubenleiste. Sie kann dann an unterschiedlichen Höhen eingesetzt werden, wodurch Ungleichmäßigkeiten des Einrammens der Stützen ausgeglichen werden können.

Ein Photovoltaikgestell wie oben kann als Montagematerial Doppelklammern aufweisen. Sie weisen jeweils eine ersten U-profilierten Klemmkammer auf, die mit ihren Schenkeln in Montageorientierung von der Seite her um das Profil einer Querpfette herumgreifen kann, und eine rechtwinklig dazu stehenden zweiten U-profilierte Klemmkammer, die mit ihren Schenkeln in Montageorientierung von oben auf das Profil einer Schrägfette aufsetzbar und daran befestigbar ist, insbesondere anschraubbar oder anklemmbar. Die Doppelklammer kann demnach einerseits eine Querpfette anklemmen und andererseits an der tragenden Schrägpfette befestigt werden, etwa durch Anklemmen oder Anschrauben.

Eine Agri-Photovoltaikanlage hat eine Photovoltaikgestell wie oben und über jedem Paar von Querpfetten mehrere Photovoltaik-Module, die mit einem Abstand voneinander von mehr als zwei oder 5 oder 10 Zentimetern angebracht sind, wobei die Photovoltaik-Module an Modulpfetten wie oben beschrieben befestigt sein können, die auf Querpfetten aufliegen können.

Nachfolgend werden Bezugnehmend auf die Zeichnungen Merkmale und Ausführungsformen der Erfindung beschrieben. Es zeigen:
Fig. 1 den Aufbau eines Felds eines Photovoltaikgestells mit Photovoltaikpaneelen darüber,
Fig. 2a viele Felder der Fig. 1 aneinandergesetzt,
Fig. 2b ein Aufstellraster der Pfosten des Photovoltaikgestells,
Fig. 3a bis 3e verschiedene Profile von Pfosten, Pfetten und Leisten,
Fig. 4a bis 4f Montagematerial,
Fig. 5a bis 5i Montagedetails,
Fig. 6 ein Photovoltaikmodul-Anordnung, und
Fig. 7a bis 7c optionale Ausgestaltungen des Photovoltaikgestells.

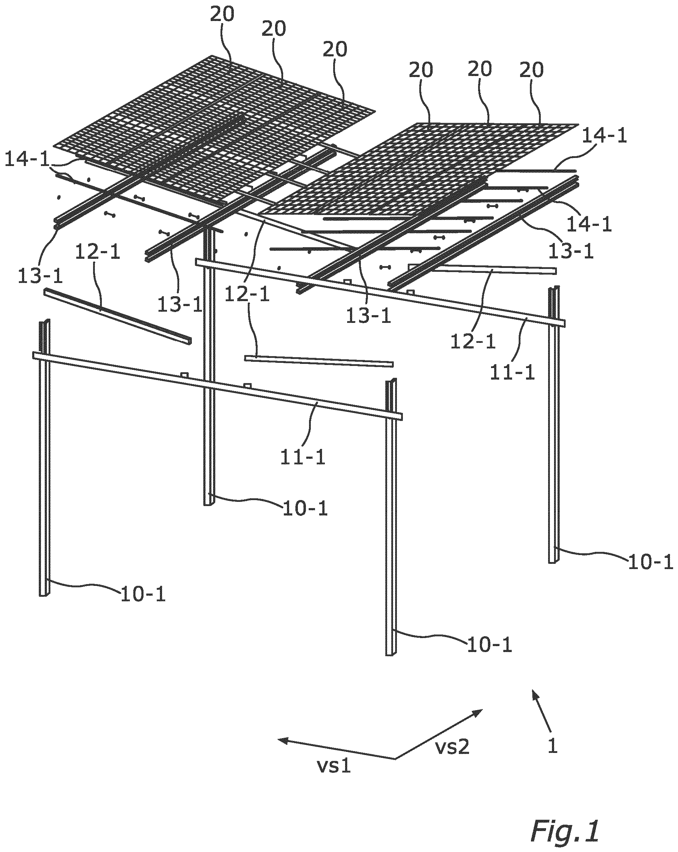

Fig. 1 zeigt perspektivisch vier in einem Viereck aufzustellende Pfosten 10-1. Zur Orientierung zeigt die Fig. 1 die zwei Pfeile vs1 und vs2, die die jeweiligen Viereckseiten in angedeutet perspektivischer Darstellung zeigen sollen, also vs1 die erste Viereckseite und vs2 die zweite Viereckseite.

Zwischen jeweils zwei gegenüberliegenden ersten Pfosten 10-1 läuft je eine erste Längspfette 11-1. Am jeweiligen oberen Ende eines jeden Pfostens 10-1 ist eine Längspfette 11 so angeklemmt, dass sowohl der Pfosten über die Längspfette hinaus als auch die Längspfette über den Pfosten hinaus jeweils einen Überstand haben. Für die Längspfetten ist der Überstand Verbaureserve, so dass unterschiedlichen Hangneigungen problemlos nachgefahren werden kann, indem die nötige Länge des Profils vorhanden ist. Der Überstand des Pfostens über die Längspfette hinaus erlaubt es, Schrägpfetten 12-1 jeweils schräg derart anzubringen, dass sie vom oberen Ende des jeweiligen Pfostens schräg nach unten auf die jeweils zugeordnete Längspfette 11-1 zulaufen. Es ist vorteilhaft, die Photovoltaikpaneele im Verbau insgesamt schräg anzustellen, da dann Wasser in definierter Weise abläuft und dabei auch selbstreinigende Mechanismen stattfinden.

Eine typische Länge einer Längspfette 11 kann über 5 oder 6 oder 7 oder 8 m liegen. Sie kann unter 12 oder 10 oder 8 m liegen. Die Länge des Überstands des Pfostens über der Längspfette kann über 20 oder 30 oder 40 cm sein. Sie kann unter 60 oder 50 cm sein. Die Länge eines Überstands der Längspfette über den tragenden Pfosten hinaus ergibt sich aus den Verbaugeometrien und kann über 5 oder 10 oder 20 cm liegen. Die summierte Länge beider Überstände der Längspfette über die tragenden Pfosten hinaus kann über 10 oder 20 oder 40 cm liegen.

Querpfetten 13-1 laufen quer zu den Längspfetten und Schrägpfetten und können auf jeweils benachbarten Schrägpfetten aufliegen oder zwischen ihnen eingehängt werden. Je ein Paar von Querpfetten 13-1 liegt auf je einem Paar benachbarter Schrägpfetten 12-1 auf oder ist zwischen ihnen eingehängt. Der Abstand der Querpfetten 13-1 längs der Schrägpfetten kann mehr als 50 oder 70% der Länge der Schrägpfette 12 sein. Im verbauten Zustand können die Querpfetten über die sie tragenden Schrägpfetten 12-1 hinaus auch jeweils einen Überstand aufweisen. Auch dies dient der Vereinfachung der Montage, indem nicht neigungsabhängig abgelenkt werden muss. Die Längen der Überstände zusammen ergibt sich aus den Verbaugegebenheiten und kann über 5 oder 10 oder 20 cm liegen. Die Querpfetten werden im Wesentlichen parallel zueinander montiert.

Allgemein ist insoweit festzuhalten, dass eine Angabe "parallel" bedeuten soll, dass die parallelen Strukturen einen Winkel von weniger als 10 oder 5 oder 2 oder 1° einschließen. Eine Angabe "rechtwinklig" soll bedeuten, dass der kleinere der eingeschlossenen Winkel mehr als 80 oder 85 oder 88 oder 89° ist.

Wiederum quer auf den Querpfetten 13 aufliegend können Paare von Modulpfetten 14-1 vorgesehen sein. Sie können dem eigentlichen Tragen der Photovoltaikmodule 20 dienen. Sie halten diese zusammen und mit gewünschten Abständen, um die schon angesprochene Vergleichmäßigung der Beregnung und Besonnung der Flächen unter der Photovoltaikanlage zu bewirken. Die Modulpfetten 14-1 können an den Querpfetten anklemmbar sein und auch als Montagereserve an den Enden je einen Überstand aufweisen, die zusammen über 5 oder 10 oder 20 cm liegen können.

Eine in Fig. 1 gezeigte Struktur wird als "Feld" angesprochen. Typische Abmessungen des Vierecks, das von den vier Pfosten des Felds abgesteckt wird, können beispielsweise 7,50 m in Richtung vs1 und 6,50 m in Richtung vs2 sein. Ein Feld nimmt dann knapp 50 m² der zur Verfügung stehenden Fläche ein.

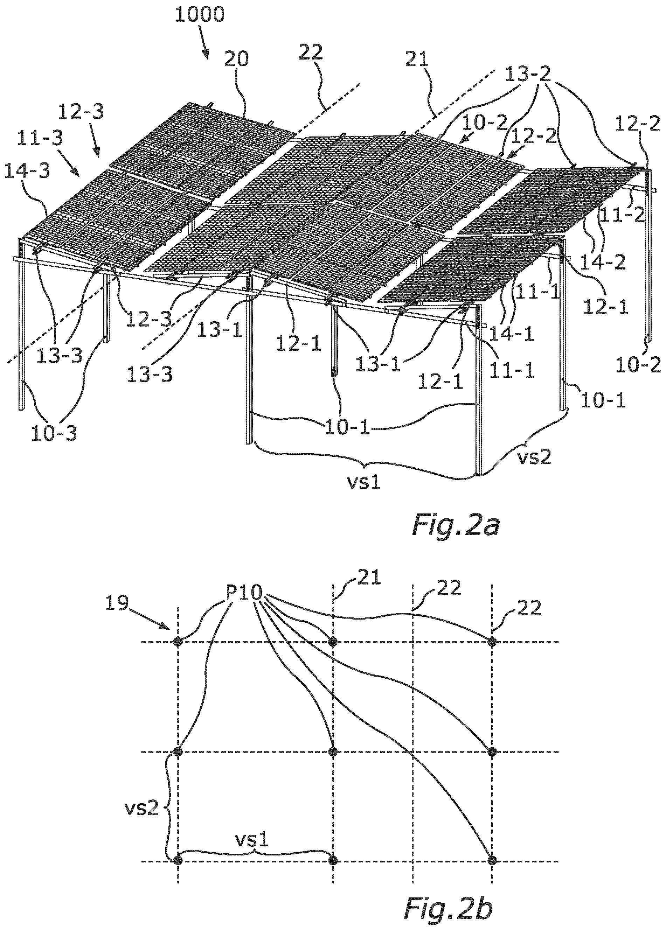

Fig. 2a zeigt für eine PV-Anlage 1000 die Aneinanderreihung von in Fig. 1 gezeigten Feldern in Längs- und Querrichtung. Vorne rechts gedacht ist das schon in Fig. 1 gezeigte Feld mit erstem Pfosten 10-1 und jeweils ersten Längspfetten, Schrägpfetten und Querpfetten darüber zu sehen. Schräg dahinter, in Fig. 2a weiter rechts oben, ist ein zweiter Pfosten 10-2 zu sehen, dessen gegenüberliegender Pfosten von den darüberliegend gezeichneten Photovoltaikpaneelen verdeckt ist. Es ist ein kurzer Ansatz einer zweiten Längspfette 11-2 zu sehen, die sich zwischen den zwei zweiten Pfosten 10-2 erstreckt. Wie bei den ersten Pfosten erstecken sich auch von den Überständen der zweiten Pfosten 12-2 zweite Schrägpfetten auf ihr jeweiliges Gegenüber zu und laufen dabei nach unten auf die zweite Längspfette 11-2 zu.

Über je einem Paar benachbarter Schrägpfetten, also insbesondere einer zweiten Schrägpfette 12-2 und einer benachbarten Schrägpfette, die in Fig. 2a eine erste Schrägpfette 12-1 ist, erstreckt sich je ein Paar zweiter Querpfetten 13. Auf ihnen wiederum können Paare von Modulpfetten 14-2 aufliegen, die schließlich die Photovoltaikpaneele 20 tragen. Zweiter Pfosten, zweite Längspfette, zweite Schrägpfette, zweite Querpfette und zweite Modulpfette können wie ihre jeweilige ersten Entsprechungen aufgebaut sein.

Fig. 2a zeigt für die PV-Anlage 1000 auch die Vervielfachung des in Fig. 1 gezeigten Felds in Richtung vs1, also auf der linken Seite der Fig. 2a. Es sind zwei dritte Stützen 10-3 vorgesehen. Jede von ihnen trägt ein Ende einer dritten Längspfette 11-3, deren anderes Ende von einer schon stehenden Stütze 10-1 getragen wird. Wenn an einer Stütze zwei Längspfetten befestigt werden, erfolgt dies vorzugsweise auf gleicher Höhe des Profils, aber an entgegengesetzten Seiten des Profils. Auch die dritten Pfosten 10-3 weisen wieder Überstände über die jeweilige Längspfette 11-3 nach oben auf. An allen Überständen der beteiligten Pfosten 10 werden dann entsprechende dritte Schrägpfetten 12-3 befestigt, die wieder aufeinander zu und hinunter auf die dritte Längspfette zulaufen und dort befestigt werden. Wenn an einem Überstand eines Pfostens zwei Schrägpfetten befestigt werden, erfolgt auch dieses vorzugsweise wieder auf gleicher Höhe, aber an entgegengesetzten Seitenflächen des Profils des Pfostens.

Auf benachbarten dritten Schrägpfetten 12-3 liegen wieder Paare von dritten Querpfetten 13-3 auf, wie dies schon zu den ersten Querpfetten 13-1 beschrieben wurde. Diese wiederum können Paare von Modulpfetten tragen, die die eigentlichen Photovoltaikmodule halten, wie auch schon beschrieben. Dritte Pfosten, dritte Längspfette, dritte Schrägpfette, dritte Querpfette und dritte Modulpfette können wie ihre jeweilige ersten oder zweiten Entsprechungen aufgebaut sein.

Durch die beschriebenen Aneinanderreihungen von Feldern ist es möglich, große Flächen zu überdecken. Die Besonnung definiert sich dann im Wesentlichen durch die Dimensionierung der Schlitze zwischen den Photovoltaikmodulen. Diese Schlitze bewirken auch eine Vergleichmäßigung der Bewässerung des Bodens unter den Paneelen.

In Fig. 2a deutet Linie 21 die Firstlinie der dachartigen Struktur an. Linie 22 deutet die Trauflinie an. Fig. 2b zeigt, dass die Firstlinie 21 jeweils über Pfosten 10 hinwegläuft, während die Trauflinie 22 zwischen Pfosten verläuft.

Fig. 2b zeigt schematisch ein Raster 19, dem folgend die Pfosten 10 aufgestellt werden können. Es ist in Draufsicht vorzugsweise ein rechtwinkliges Raster mit erster Viereckseite vs1 und zweiter Viereckseite vs2 rechtwinklig dazu. Das Raster wird regelmäßig geplant, und dementsprechend werden beim Bau des Photovoltaikgestells die Pfosten gesetzt und z. B. in den Boden gerammt. Die einzelnen Punkte P10 zeigen Montagepositionen der jeweiligen Pfosten 10.

Die Figuren 1 und 2a zeigen zueinander bezüglich der Trauflinie 22 symmetrische rechteckige Halbfelder eines Felds eines Gestells 1 bzw. einer PV-Anlage 1000. Schräg- und Modulpfetten 12, 14 von längs einer Trauf- oder Firstlinie 21, 22 benachbarten Halbfeldern können dann gleich lang sein. Dies kann so sein, ist aber nicht zwingend erforderlich. Die Halbfelder können zwar jeweils rechteckig, aber zueinander asymmetrisch sein, was sich insbesondere auf die Dimensionierung der Schrägpfetten 12 und der Modulpfetten 14 auswirkt. Es wirkt sich auch auf die Maße und/oder Anzahl der in einem Halbfeld verbauten PV-Module 20 aus. Schräg- und Modulpfetten 12, 14 von längs einer Trauf- oder Firstlinie 21, 22 benachbarten Halbfeldern können dann unterschiedlich lang sein. Eine Trauflinie 22 liegt dann nicht symmetrisch zwischen zwei Firstlinien 21. Im Verbau können Trauf- und Firstlinien 21, 22 der Photovoltaikanlage 1000 in Nord-Süd-Richtung ausgerichtet sein oder um nicht mehr als 40 oder 20 oder 10 oder 5° dagegen verdreht.

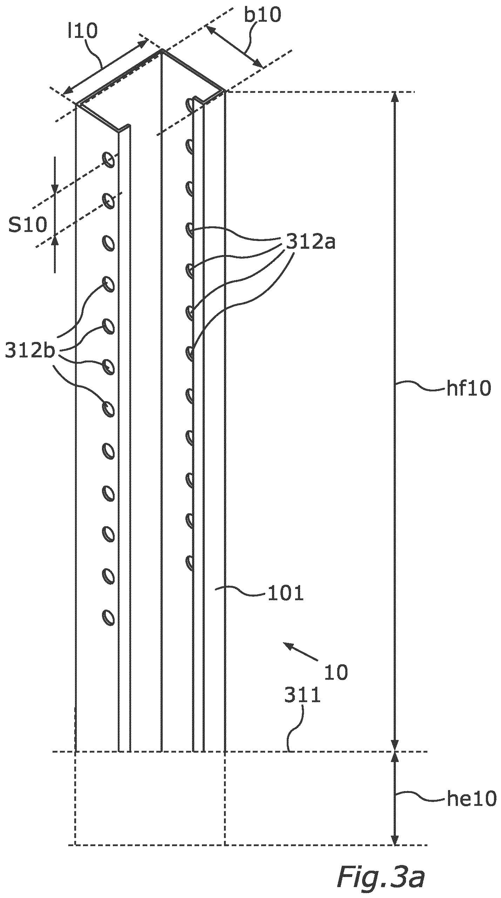

Fig. 3a zeigt schematisch und teils perspektivisch einen Pfosten 10. Die Stütze 10 hat im Verbau eine Höhe im Erdreich he10 unter dem Boden 311 und eine freiliegende Höhe hf10 über dem Boden 311. Die Höhe im Erdreich he10 kann nach Verbau über 50 oder 100 oder 150 cm sein. Sie kann unter 300 oder unter 200 oder unter 150 cm sein. Die freie Höhe hf10 über dem Boden 311 kann über 300 oder über 350 oder über 380 cm liegen. Sie kann unter 500 oder unter 450 oder unter 400 cm liegen.

Das Profil 101 bzw. der Grundriss eines Pfostens 10 kann einem Rechteckprofil folgen. Es kann in dem Sinn offen sein, dass, wie in Fig. 3a gezeigt, ein Eckbereich fehlt, was einerseits der Materialersparnis dient und andererseits den Zugang ins Innere des Profils ermöglicht, was die Montage vereinfacht. Die freien Längskanten des Profils können jeweils nach innen abgekröpft sein.

Fig. 3a zeigt das obere Ende des Pfostens 10 perspektivisch. Es sind gegenüberliegende Lochreihen 312a und 312b gezeigt. Sie verlaufen in vertikaler Richtung und können einer regelmäßigen Rasterung folgend angebracht sein. Der Abstand der Löcher s10 kann beispielsweise über 4 oder über 6 cm liegen. Er kann unter 10 oder 8 cm liegen. Mehr als 8 oder 10 oder 12 Rasterpositionen können mit Löchern 312 versehen sein. Es können weniger als 15 oder 12 sein. Im unteren Bereich der Lochreihe wird die Längspfette 11 angeklemmt, im oberen Bereich eine Schrägpfette 12 angebracht. Die einander gegenüberliegenden Lochreihen 312a, b dienen der Anbringung von mehreren Längspfetten 11 und darüberliegend mehreren Schrägpfetten 12, die jeweils in entgegengesetzte Richtung abgehen, wie dies für den Pfosten 10-1 in Fig. 2a vorne in der Mitte angedeutet zu sehen ist.

Der Rechteckgrundriss des Profils kann eine Länge 110 und eine Breite b10 haben. Die Länge 110 kann quer zu anzubringenden Längspfetten laufen, die Breite b10 parallel dazu. Die Länge I10 kann über 5 oder 10 oder 15 cm liegen. Gleiches gilt für die Breite b10. Die Maße können unter 30 oder 20 cm liegen. Das Material des Profils kann Metall sein oder aufweisen, insbesondere Aluminium oder verzinktes Eisen oder Stahl. Es kann auch einen Kunststoff aufweisen.

Beim Verbau eines Pfostens 10 kann ein geeignetes Rammwerkzeug von einer Baumaschine oder einer Landwirtschaftsmaschine oben auf das obere Ende des Pfostens aufgesetzt werden, das die Pfosten einrammt und die entstehenden Stöße gleichmäßig in das Pfostenmaterial einleitet. Gegebenenfalls kann der Grund vor dem Einrammen des Pfostens ohne den Pfosten aufgelockert werden, etwa aufgebohrt, um die Belastung durch das Einrammen zu verringern.

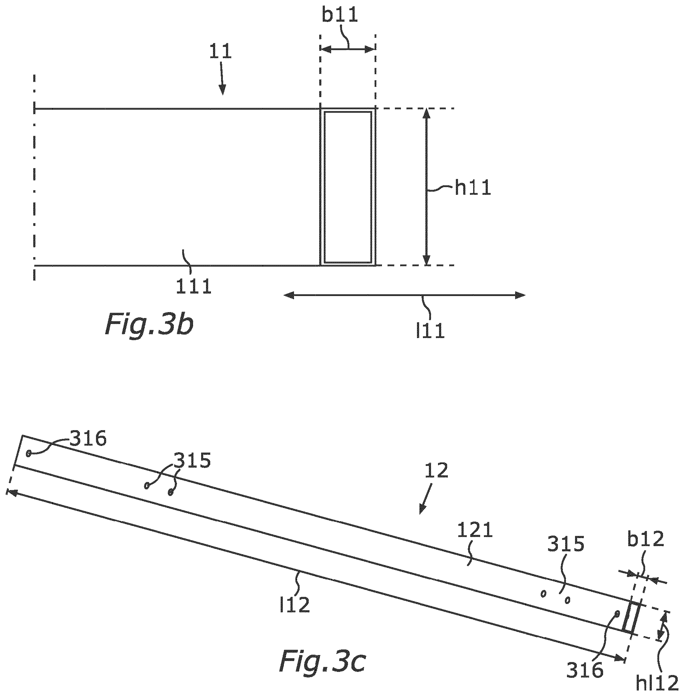

Fig. 3b zeigt das Profil 213 einer Längspfette 11. Es kann ein Rechteckprofil sein und eine Höhe h11 und eine Breite beispielsweise aufweisen. Die Breite kann über 2 oder 5 oder 10 cm liegen. Die Höhe kann über 5 oder 10 oder 15 cm liegen. Alle Maße können unter 30 cm liegen. Auch bei der Längspfette 11 kann das Material Metall sein oder aufweisen, insbesondere Aluminium oder verzinktes Eisen oder Stahl, oder es kann einen Kunststoff aufweisen. Die Länge I11 einer Längspfette insgesamt ist so dimensioniert, dass sie die Länge der Viereckseite vs1 mit Überstand überdeckt. Der Überstand ist dann Verbaureserve für den Fall, dass das Gelände geneigt ist. Die Länge I11 kann mehr als 105% der Viereckseite vs1 sein. Sie kann weniger als 110% der Viereckseite vs1 sein.

Fig. 3c zeigt schematisch eine Schrägpfette 12. Auch sie kann ein Viereckprofil sein mit einer Breite b12 und einer Höhe h12. Die Breite b12 kann über 2 oder über 5 cm liegen, die Höhe h12 über 5 oder über 8 cm. Alle Maße können unter 15 cm liegen. Die Breite b12 einer Schrägpfette 12 kann die gleiche sein wie die Breite b11 einer Längspfette oder kann etwas geringer sein, z. B. 1 bis 5 mm geringer. Die Länge I12 einer Schrägpfette 12 kann mehr als 35 oder 40 oder 45 oder 48% des Abstands zwischen zwei gegenüberliegenden Pfosten 10 sein. Sie kann weniger als 50% oder 48% sein. Die zugängliche Länge einer Schrägpfette 12 definiert im Wesentlichen den zur Verfügung stehenden Platz für die Montage von Photovoltaikmodulen. Es kann gewünscht sein, dass im Bereich der Traufe 22 der Abstand zwischen einander gegenüberliegenden Photovoltaikmodulen größer ist als zwischen zwei auf einer Modulpfette montierten Modulen. Er kann über 10 oder 20 oder 30 cm liegen und kann unter 60 oder 40 oder 30 cm liegen. Auch das Material einer Schrägpfette kann Aluminium oder verzinktes Eisen oder Stahl aufweisen, oder es kann einen Kunststoff aufweisen.

Die Schrägpfette 12 kann an ihren Enden Bohrungen 316 aufweisen, um sie einerseits am Überstand eines Pfostens 10 anbringen zu können. Andererseits kann eine Anklemmung mit dem anderen Ende an einer Längspfette 11 erwünscht sein. Es können weitere Bohrungen 315 vorgesehen sein, um die Anbringung von Querpfetten zu erleichtern. Längs der Schrägpfette 12 liegen die Bohrungen 315 da, wo quer zur Schrägpfette die Querpfetten angebracht werden sollen.

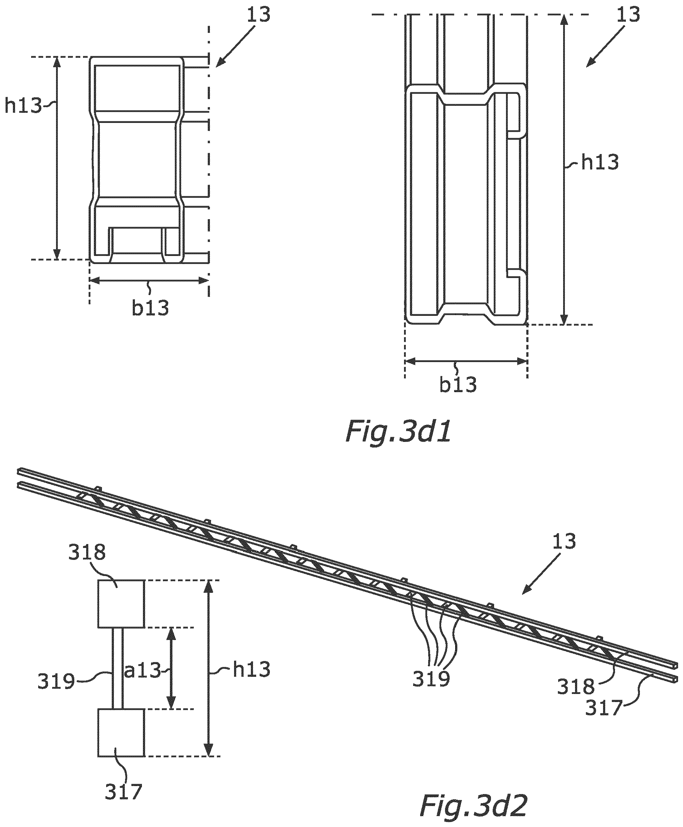

Eine Querpfette 13 kann in einer Ausführungsform ein Profil qualitativ etwa wie in Fig. 3d1 gezeigt haben, das in etwa ein eher eckig angelegtes und nach unten offenes U - links gezeigt - oder nach rechts offenes C - rechts gezeigt - sein kann. Es kann auch ein Rechteckprofil sein. In Montageorientierung kann die Öffnung des C in horizontale Richtung zeigen oder die Öffnung eines U nach unten. Die in Montageorientierung etwa vertikal liegende Profilwand h13 kann mindestens zweimal so hoch sein wie die in Montageorientierung etwa horizontal liegende Profilwand b13 breit ist. Querpfetten 13 mit solchen Profilen können etwas kürzer sein - z. B. zwischen 10 und 20 cm kürzer - als der lichte Abstand zwischen den in ihrer Montagerichtung beabstandeten Schrägpfetten 12. Sie können dann z. B. mit entsprechenden Montagehaken 44-1 zwischen die Schrägpfetten 12 eingehängt werden. Sie können aber auch länger als besagter Abstand sein und einen gewissen Überstand an beiden aufweisen und dann auf die Schrägpfetten 12 aufgeklemmt oder aufgeschraubt werden.

Fig. 3d2 zeigt eine weitere Ausführungsform einer Querpfette 13. In der gezeigten Ausführungsform ist sie aus parallel laufenden Leisten 317, 318 aufgebaut, zwischen denen Verstrebungen 319 laufen können, die diagonal und zusammen insbesondere zickzackförmig laufen können. Sie können an den Leisten angeschweißt sein. Die zwei Leisten haben zueinander einen Abstand a13 und miteinander eine Höhe h13. Der Abstand a13 entspricht der Höhe h12 einer Schrägpfette 12, so dass die freien Enden der Querpfette 13 oben und unten um eine Schrägpfette 12 herum aufgeschoben werden können. Die Enden der Querpfette 13 weisen keine Verstrebungen auf, um dieses Einschieben der Querpfette 13 auf eine Schrägpfette 12 zu ermöglichen.

Die Gesamtlänge einer solchen Querpfette ist so, dass sie über zwei benachbarte Schrägpfetten 12 hinwegreicht und dann einen dritten Überstand 320 aufweist. Abermals ist der Überstand Verbaureserve, um ohne aufwändige Ablängungen vor Ort unterschiedlichen Längenerfordernissen einfach Rechnung tragen zu können. Die Gesamtlänge kann mehr als 102 oder 105% der zweiten Viereckseite vs2 sein. Sie kann weniger als 115 oder 110 oder 105% dieser zweite Viereckseite vs2 sein.

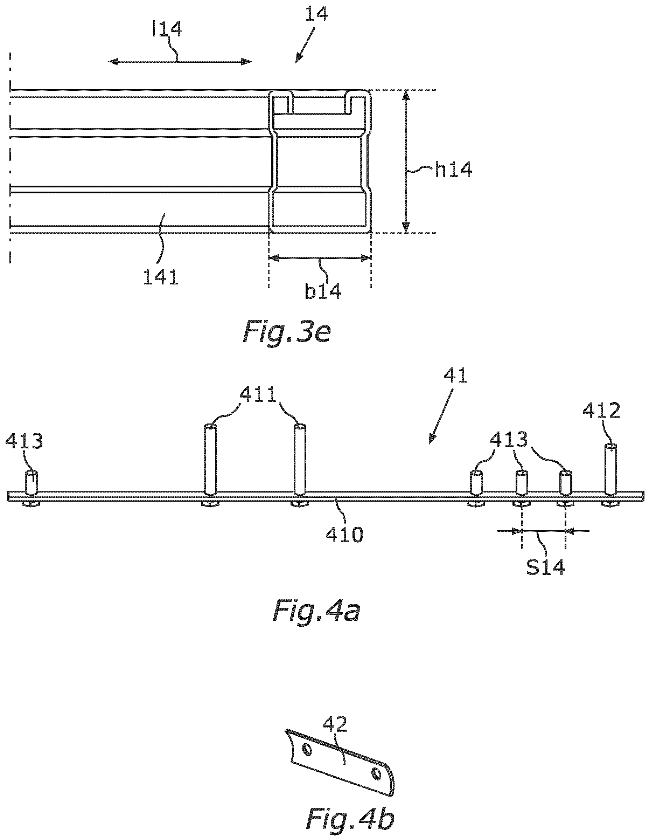

Fig. 3e zeigt ein Profil 321einer Modulpfette 14. Modulpfetten 14 können zwischen den Querpfetten und den Photovoltaikmodulen 20 liegen und im Wesentlichen parallel zu den Schrägpfetten laufen. Insbesondere können je ein Paar von Modulpfetten 14 mehrere Photovoltaikmodule 20 beabstandet halten. Eine solche Einheit kann am Boden vormontiert und dann auf den sonst vorbereiteten Aufbau aufgesetzt werden. Das Profil 321 einer Modulpfette 14 kann ein Rechteckprofil mit einer offenen Seite sein, wobei zur Erhöhung der Stabilität zwei gegenüberliegende Seiten eingedrückt sein können. Freie Enden im Profil 321 können eingekröpft sein. Das Material einer Modulpfette 14 kann Metall sein oder aufweisen, insbesondere Aluminium oder verzinktes Eisen oder Stahl. Es kann auch Kunststoff aufweisen.

Die Höhe h14 und Breite b14 des Profils einer Modulpfette 14 können größer als 3 oder 5 cm sein. Sie können unter 15 oder 10 cm liegen. Die Gesamtlänge I14 einer Modulpfette ergibt sich mittelbar aus den Größen und der Anzahl der in einer Reihe zu verbauenden Photovoltaikmodule 20 und kann verglichen dazu und/oder verglichen zum Abstand tragender Querpfetten 13 einen vierten Überstand aufweisen, der über beide Enden zusammen mehr als 5 oder 10 oder 20 cm sein kann.

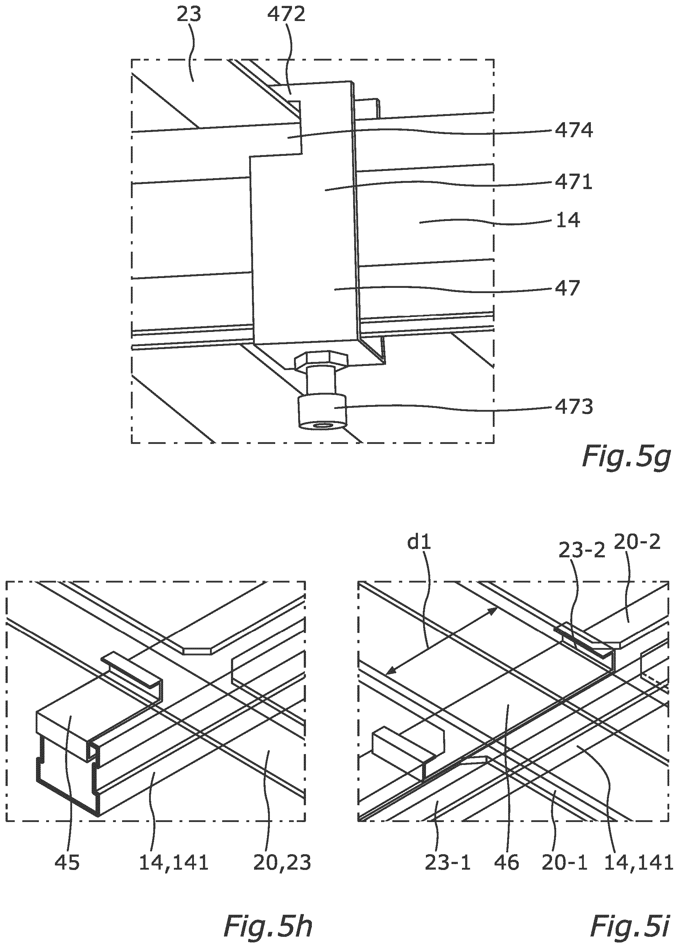

Die Fig. 4a bis 4f und 5g zeigen einzelne Montagematerialen. Fig. 4a zeigt eine Schraubenleiste 41, die verschiedene Stifte mit Gewinden hält, um verschiedene Befestigungen einheitlich vornehmen zu können und die dafür nötigen Gewinde einheitlich handhaben zu können. Die Schraubenleiste hat einen länglichen Leistenkörper 410, von dem Stifte abstehen, bei denen mindestens die vorderen Enden mit Gewinden versehen sind. Die Abstände der Stifte zueinander können der gleichen regelmäßigen Rasterung folgen, die bei den Bohrungen 312 im oberen Teil eines Pfostens 10 vorhanden ist.

Bei Verwendung beim Aufbau eines Photovoltaikgestells wird eine Schraubenleiste 41 wie gezeigt in das Innere des Profils eines Pfostens 10 geführt und dann so eingelegt, dass die Zapfen am oberen Pfostenende durch die Bohrungen 312 nach außen ragen. Verschiedene Zapfen mit verschiedenen Funktionen sind vorgesehen. Im Verbau liegt der in Fig. 4a gezeigte Zapfen 412 oben. Er ragt relativ weit aus der Oberfläche des aufnehmenden Pfostens 10 hervor, und insbesondere so weit, dass das durchbohrte Ende einer Schrägpfette 12 auf den Zapfen 412 aufgeschoben werden kann und dann mit einer Mutter und gegebenenfalls weiteren Elementen (Beilagscheibe etc.) gesichert werden kann. Die zwei Stifte 411 dienen der Anbringung eines in Fig. 4b gezeigten Klemmkörpers 42. Ihr Abstand ist so bemessen, dass er etwas größer ist als die Höhe h11 einer Längspfette 11, so dass diese zwischen die zwei Stifte 411 geschoben werden kann. Ihre Länge ist so, dass sie die Breite der Längspfette 11 überragen, so dass der Klemmkörper 42 aufgeschoben und dann festgeschraubt werden kann. Kleinere Stifte 413 können auch im Raster vorgesehen sein. Sie können dem isolierten Anschrauben der Schraubenleiste 41 dienen und so den Gesamtaufbau stabilisieren.

Der in Fig. 4b gezeigte Klemmkörper 42 ist länger als der Abstand der zwei Stifte 411 und kann leicht konisch geformt sein, so dass er Kanten hat, die in Richtung Längspfette 11 gelegt werden können, so dass eine gute Klemmung durch leichtes Einschneiden der Kanten beim Anziehen der Muttern bewirkt wird.

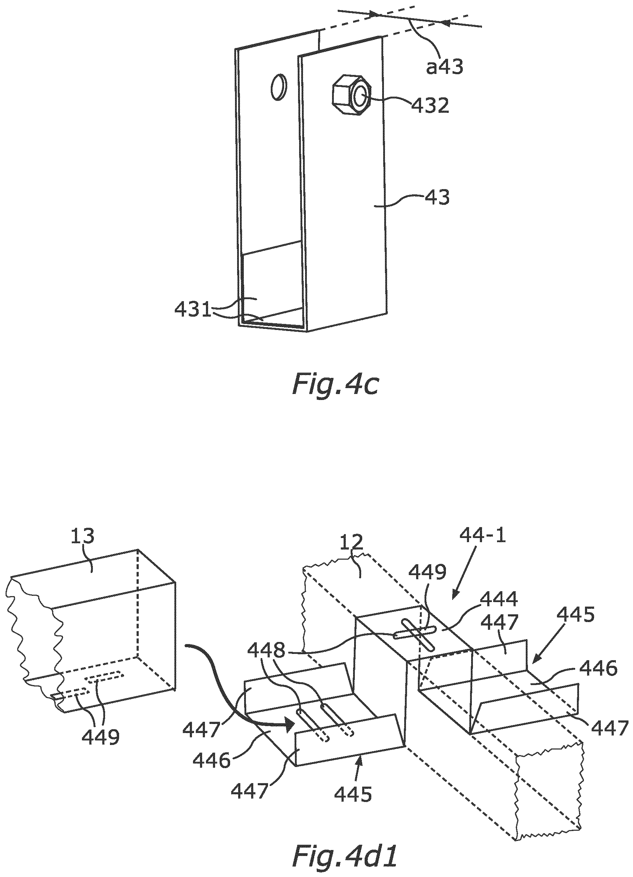

Fig. 4c zeigt einen Haltekörper 43, das der Befestigung des unteren Endes einer Schrägpfette 12 an einer Längspfette 11 in der Nähe deren Mitte dient. Er hat ein U-förmiges Profil. Der Abstand a43 der Schenkel des U entspricht der Breite d11 einer Längspfette 11. Die Länge der Schenkel ist höher als die Höhe h11 des Profils der Längspfette 11. Der Haltekörper kann in dieser Dimensionierung von unten auf eine Längspfette 11 aufgeschoben werden, so dass die oberen Schenkelenden über das obere Ende der Längspfette 11 hinausragen. Die Dimensionierung ist so, dass dann eine Schraube durch Löcher an den Schenkelenden des Haltekörpers 43 und ein entsprechendes Loch 316 der Schrägpfette 12 geschoben werden kann. Durch Verschrauben wird die Konstruktion dann angezogen und festgelegt. 432 ist eine Mutter, die am Haltekörper 43 vormontiert, etwa angeschweißt, sein kann, so dass im Verbau einfach gearbeitet werden kann. 431 ist ein nachgiebiges und die Reibung erhöhendes Material. Es ist im Verbau zwischen Seitenwänden des Haltekörpers 43 und der Längspfette 11 eingelegt, so dass eine vorgegebene Position gut gehalten wird. Es kann Gummi sein oder aufweisen.

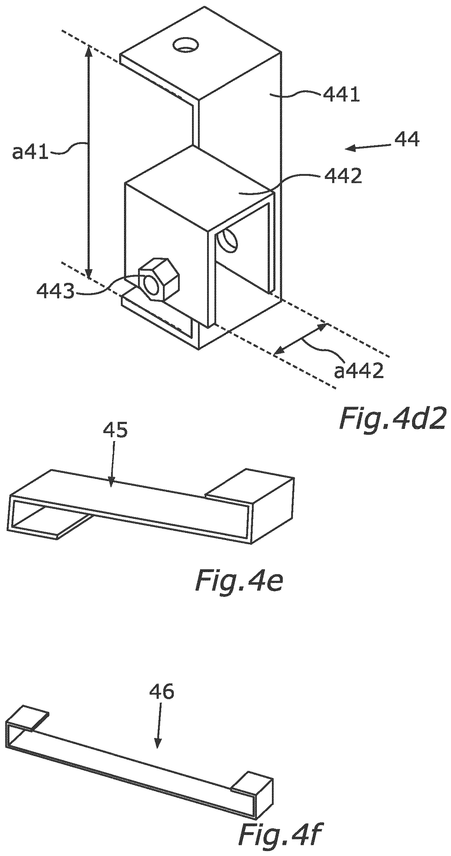

Fig. 4d1 zeigt einen Montagehaken 44-1, der zum Anbringen und Sichern eines Endes einer Querpfette 13 mit U- oder C-Profil wie in Fig. 3d1 gezeigt oder mit Rechteckprofil an einer Schrägpfette 12 verwendet werden kann. Er weist einen Hakenbereich 444 und einen oder zwei seitlich angesetzte Haltebereiche 445 auf. Der Hakenbereich 444 kann so geformt, profiliert und dimensioniert sein, dass er formschlüssig über eine Schrägpfette 12 gelegt werden kann und der bzw. die Haltebereich(e) 445 dann seitlich davon abstehen. Er weist eine obere Auflagefläche und und ein oder zwei nach unten abgehende Seitenflächen auf. Ein Haltebereich 445 weist unten einen Unterfangbereich 446 und seitlich einen oder zwei Anlagebereiche 447 auf. Der Unterfangbereich 446 kann an die Seitenfläche des Hakenbereichs 444 ansetzen. Eine Querpfette 13 kann auf dem Unterfangbereich 446 aufliegen und am Anlagebereich 447 anliegen.

Der Haltebereich 445 kann eine Abmessung weg von der Schrägpfette von mindestens 10 oder 20 oder 30 cm haben. Die Hakenbreite in Richtung der Schrägpfette 12 kann über 2 oder 5 oder 10 cm sein. Sie kann unter 20 cm sein. Sie kann in etwa der Profilbreite der Querpfette 13 entsprechen. Die Querpfette 13 hat eine Länge gleich wie oder etwas kürzer als die lichte Weite zwischen zwei in Längsrichtung der Querpfette 13 benachbarten Schrägpfetten 12. Montageschlitze 448 an geeigneten Stellen des Hakenbereichs 444 und/oder der Haltebereiche 445 des Montagehakens 44-1 können rechtwinklig dazu laufenden Montageschlitze 449 in Schrägpfette 12 oder Querpfette 13 kreuzen und dem Positionieren und Festziehen von Montagematerial - z. B. nicht gezeigte Mutter und Schrauben und Beilagscheiben - dienen.

Fig. 4d2 zeigt eine Doppelklammer 44-2, die zum Anbringen und Sichern eines Endes einer Querpfette 13 gemäß Fig. 3d2 an einer Schrägpfette 12 verwendet werden kann. Die Doppelklammer 44 weist eine erste U-profilierte Klemmklammer 441 auf, die im Verbau längs einer Schrägpfette nach schräg oben gerichtet offen ist. Der Abstand a441 zwischen den zwei Schenkeln der ersten Klemmkammer 441 entspricht der Höhe h13 einer Querpfette 13, so dass eine Querpfette 13 der Höhe nach von schräg oben seitlich in die erste Klemmkammer 441 eingeschoben werden kann. Die Schenkel sind so dimensioniert, dass sie dann über die Querpfette 13 hinausragen, so dass die Schenkel dann aneinander verschraubt werden können und so eine Einklemmung der Querpfette bewirken. 442 ist eine Mutter, die am Schenkel einer Klemmkammern 441, 442 vormontiert, etwa angeschweisst, sein kann, so dass im Verbau einfach gearbeitet werden kann. Beide Klemmkammern 441, 442 können solche vormontierten Muttern 442 aufweisen.

Die zweite Klemmkammer 442 ist ein nach unten offenes U-Profil, dessen Schenkel einen Abstand a442 haben, der der Breite b12 einer Schrägpfette 12 entsprechen. Die Klemmkammern sind so gerichtet, dass die Durchlaufrichtungen der jeweils eingeklemmten Pfetten 12, 13 zueinander im Wesentlichen rechtwinklig ist. Die zweite Klemmkammer 442 kann mittels Muttern und entsprechenden Löchern an entsprechenden Löchern 315 einer Schrägpfette befestigt werden.

Fig. 4e und 4f zeigen Montagematerial für die Photovoltaikpaneele. Sie dienen als Abstandshalter der Paneele in Richtung längs der Modulpfetten 14, auf die die Paneele 20 aufgeschraubt werden. Die S-förmig profilierte Klammer 45 dient dem Einhängen des obersten Paneels 20 längs der Schräge einer im Verbau schräg liegenden Modulpfette 14 betrachtet und dem Sichern seiner Position in Richtung schräg nach unten. Der offene Bereich links unten in Fig. 4e kann in die obere Öffnung des Profils der Modulpfette 14 eingeschoben werden. Die Hakenstruktur rechts hintergreift einen zugänglichen Rand 23 eines Photovoltaikmoduls 20. Der Abstandshalter 45 dient dabei nicht der Befestigung, sondern der Definition der Position eines Photovoltaikmoduls 20 in Richtung längs einer Modulpfette 14.

Die Klammer 46 der Fig. 4f hat zwei Hakenbereiche. Mit dem einen hakt sie sich bei einem zugänglichen Rand 23 eines oberen Moduls 20-1 ein, mit dem anderen bei einem zugänglichen Randberiech 23 eines unteren Moduls 20-2. Auch hier dient die Klammer 46 nicht der Befestigung, sondern der Definition der Position längs der Modulpfette. Die Klammern 45, 46 können aus Blech gefertigt sein.

Die schnelle und genaue Definition der Modulpositionen längs der Modulpfetten 14 kann insbesondere dann wichtig und hilfreich und sinnvoll sein, wenn die Photovoltaikmodule nicht auf die Modulpfetten 14 vormontiert werden, sondern wenn diese Montage unmittelbar vor Ort oben am Gestell erfolgt.

Fig. 5g zeigt eine Modulklammer 47. Sie kann U-förmig profiliert sein und einen Schenkelabstand entsprechend der Breite b14 einer Modulpfette 14 haben. Seitlich weisen die Schenkel 471 Ausnehmungen 474 auf, so dass im Verbau darüber distal Klauen 472 seitlich abstehen, die hinter zum Modul in etwa flächenparallele Ränder 23 von PV-Modulen 20 greifen können. Mit einer Schraube 473 können die Klauen 472 auf die Modulpfette 14 heruntergezogen werden und so die Ränder 23 zwischen Modulpfette 14 und Klaue 472 festklemmen. Die Modulklammern 47 sind von unten anbringbar und schraubbar, so dass das Fixieren und Lösen von PV-Modulen an der Aufständerung, insbesondere an den Modulpfette 14, von unten auch bei weitgehend geschlossener Dachfläche erfolgen kann.

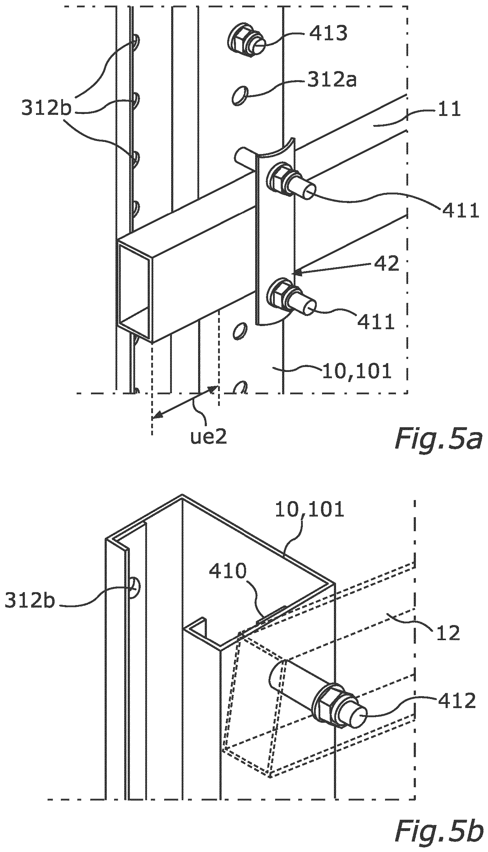

Die Fig. 5a bis 5i zeigen Montagedetails. Fig. 5a zeigt die Anklemmung einer Längspfette 11 an einem Pfosten 10. Zu sehen sind die Zapfen 441 der Schraubleiste 44, wie sie aus den Öffnungen 312 im Profil des Pfostens 10 herausragen. Der Klemmkörper 42 ist mit Muttern aufgeschraubt und klemmt die Längspfette 11 zwischen sich und der Seitenwand des Pfostens 10 ein. 413 zeigt einen kurzen Stift der Schraubleiste 44, der für sich alleine vorab verschraubt wird, um die Schraubleiste 41 und damit alle Stifte im oberen Bereich des Pfostens 10 zu halten, gerade dann, wenn die Längspfetten 11 noch nicht angeklemmt sind.

Fig. 5b zeigt die Anbringung einer Schrägpfette 12 oben am Überstand eines Pfostens 10. Zu sehen ist der Zapfen 412 der Schraubleiste 41, wie er von innen aus dem Profil des Pfostens 10 herausragt. Das Ende der Schrägpfette 12 ist gegebenenfalls mit einer Hülse auf den Zapfen 412 aufgeschoben und wird dann mit einer Mutter und weiteren Materialien gesichert. 312b zeigt beispielhaft eine Bohrung einer nicht weiter ausführlich gezeigten Folge von Bohrungen gemäß dem beschriebenen Raster. 410 ist der Leistenkörper der Schraubleiste 41.

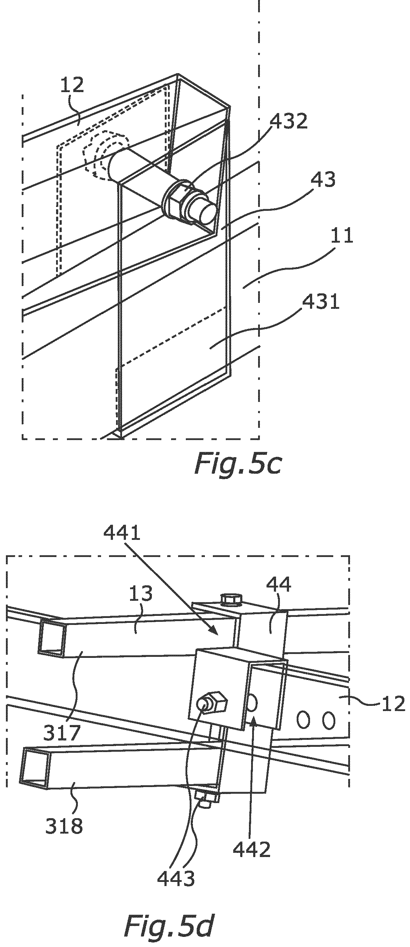

Fig. 5c zeigt die Befestigung des unteren Endes der Schrägpfette 12 auf der Längspfette 11. Gezeigt ist der Haltekörper 43, der von unten um die Längspfette 11 herumgreift und dessen Schenkelenden das Ende der Schrägpfette 12 so umgreifen, dass mit einer Schraube das Ende der Schrägpfette 12 mit den Schenkelenden des Haltekörpers 43 verschraubt werden kann. Diese Art der Befestigung hat den Vorteil, dass die Längspfette 11 nicht angebohrt werden muss, so dass sie strukturell unbeschädigt ist, was ihrer Stabilität zuträglich ist. 431 ist das nachgiebige Material, das zwischen den Seiten der Längspfette 11 und des Haltekörpers 43 liegen und auch unten um die Längspfette herum geführt sein kann.

Fig. 5d zeigt die Befestigung einer Querpfette 13 an einer Schrägpfette 12 mit einer Doppelklammer 44. Die erste Klemmkammer 441 der Doppelklemme 44 umgreift die Kontur der Querpfette 13 der Höhe nach. Zwischen den Leisten der Querpfette 13 liegt die Schrägpfette 12, auf die ihrerseits die zweite Klemmkammer 442 der Doppelklammer 44 von oben aufgesetzt wird. Bohrungen in der Schrägpfette 12 können verwendet werden, um die zweite Klemmkammer 442 daran zu befestigen. Fig. 5d deutet an, dass im Verbau Querpfette 13 und Schrägpfette 12 in etwa rechtwinklig zueinander liegen, was durch die Geometrie der Doppelklammer 44 ermöglicht wird. Die Doppelklammer 44 legt eine Querpfette 13 längs einer Schrägpfette 12 fest und verhindert, dass der Aufbau im Lauf der Zeit schräg abwärts rutscht.

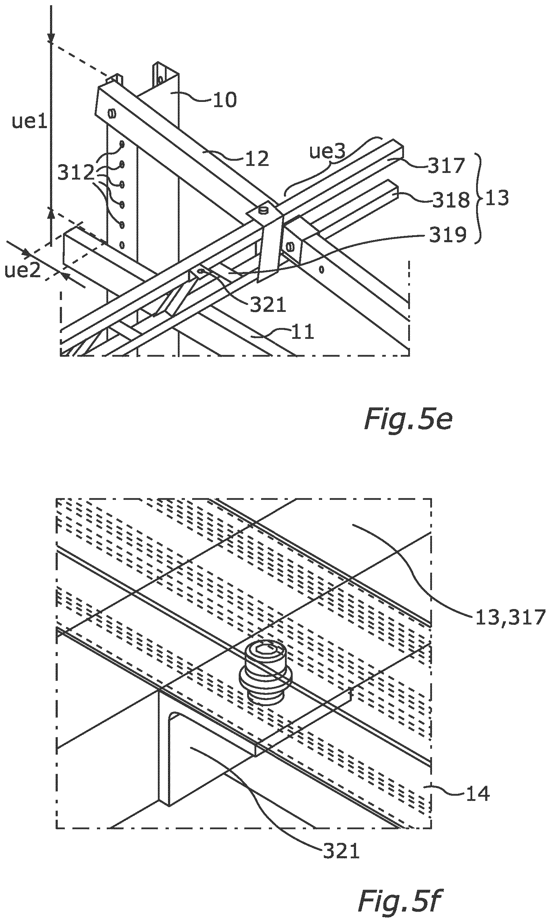

Fig. 5e zeigt schematisch einen oberen Bereich in der Nähe eines Überstands eines Pfostens 10. Der erste Überstand eines Pfostens 10 ist mit ue1 gezeigt. Er kann über 20 oder 30 oder 40 cm liegen. Er kann unter 80 oder 60 oder 40 cm liegen. Der Überstand einer Längspfette über dem tragenden Pfosten ist mit ue2 bezeichnet. Er kann über 10 oder 20 cm liegen. Er kann unter 40 oder 30 cm liegen. Die Schrägpfette 12 ist als zwischen den Leisten 317 und 318 einer Querpfette 13 liegend und von einer Doppelklammer 44 gehalten gezeigt. Die Querpfette 13 weist über die tragende Schrägpfette 12 hinaus einen dritten Überstand ue3 auf, der als Verbaureserve dient, um ein Ablängen beim Verbau vor Ort vermeiden zu können.

Würden in Fig. 5e am Pfosten 10 auch in die andere Richtung als gezeigt weitere Längs- und Schrägpfetten 11, 12 ansetzen, wären sie an der verdeckten Seite des Profils gegenüber der sichtbaren Seite des Profils angebracht und würden in Fig. 5e nach links oben laufen.

Fig. 5f zeigt schematisch die Befestigung einer Modulpfette 14 an einer Querpfette 13. Es kann ein an beiden Pfetten anzuschraubender Winkel 321 verwendet werden. Zum Ausgleich windschiefer Verhältnisse, die sich wegen einen unebenen Untergrunds ergeben können und die realistischerweise regelmäßig anzunehmen sind, können ggf. nicht gezeigte Abstandshalter zwischen Winkel 321 und Modulpfette 14 und/oder zwischen Modulpfette 14 und Querpfette 13 und/oder zwischen Querpfette 13 und Schrägpfette 12 vorgesehen sein.

Fig. 5g zeigt verbaut schematisch die schon beschriebene Modulklammer 47. Auch hier kann zum womöglich nötigen Ausgleich windschiefer Verhältnisse ein Abstandshalter zwischen Modulrand 23 und Modulpfette 14 eingelegt werden. Ein PV-Modul 20, insbesondere ein waagrecht liegender, hintergreifbarer Randbereich 23 des Moduls 20, liegt auf einer Modulpfette 14 oder einem Abstandshalter auf. Die Modulklammer 47 wird von unten um die Modulpfette 14 herum nach oben und dann in Figur 5g nach links geschoben, so dass die Klauen 472 den Rand 23 des Moduls 20 hintergreifen, was durch die Ausnehmung 474 ermöglicht wird. In dieser Lage kann die Modulklammer 47 festgeschraubt werden.

Fig. 5h zeigt schematisch die Verwendung der S-förmig profilierten Klammer 45. Sie ist mit ihrem linken Ende in die Öffnung der Modulpfette 14 eingehängt, mit ihrem rechten Ende hinter den Rand23 eines PV-Moduls 20. Dieser Bereich der Klammer 45 kann im Verbau zwischen den Klauen 472 an den Schenkeln 471 einer Modulklammer 47 liegen.

Fig. 5i zeigt schematisch die Verwendung der C-förmig profilierten Klammer 46. Die beiden Enden der Klammer 46 sind jeweils an Ränder 23-1 und 23-2 zweier längs der Modulpfette 14 benachbarter Module 20-1 und 202 eingehängt. Auch diese Klammerbereiche können auch zwischen den Klauen 472 an den Schenkeln 471 einer Modulklammer 47 liegen.

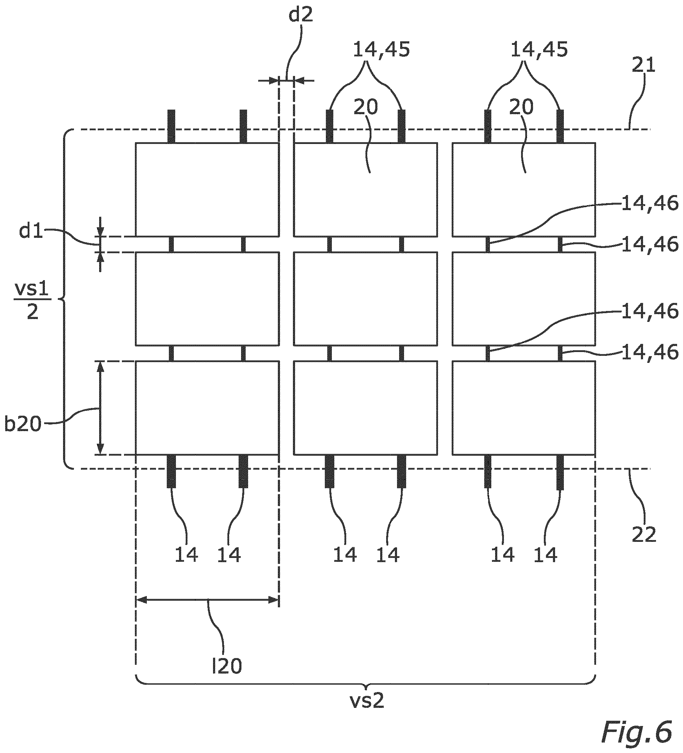

Fig. 6 zeigt isoliert Photovoltaikmodule 20, wie sie an Modulpfetten 14 verbaut sein können. Mit 21 ist die Firstlinie des entstehenden Konstrukts angedeutet, mit 22 die Trauflinie. Photovoltaikmodule 20 haben eine Länge I20 und eine Breite b20. Die Länge I20 kann über 100 oder 150 oder 200 cm sein. Sie kann unter 300 oder 250 cm sein. Die Breite b20 der Module 20 kann über 50 oder 80 oder 100 cm sein. Sie kann unter 200 oder 150 oder 120 cm sein. Fig. 6 zeigt für drei Reihen von je drei Modulen 20 drei Paare von Modulpfetten 14. Je ein Paar trägt eine Reihe von Photovoltaikmodulen 20. Die PV-Module 20 sind mit ihrer Längsrichtung vorzugsweise parallel zur First- und Traufrichtung ausgerichtet.

Längs einer Modulpfette 14 haben die Module 20 einen Abstand d1, der über 5 oder 7 oder 10 cm liegen kann. Er kann unter 20 oder 15 cm liegen. Mit den Klammern 46 wird dieser Abstand eingestellt, bevor die Module 20 auf den Modulpfetten 14 festgeschraubt werden. Klammern 45 können den Abstand des obersten Moduls 20 relativ zu einem oberen Ende einer Modulpfette 14 einstellen, bevor die mechanische Fixierung erfolgt. Der Abstand d1 kann auch mehr als 3 oder 5 oder 7 oder 10% der Breite b20 der Module sein. Er kann kleiner als 15 oder 10 oder 7% dieser Breite sein.

Auch in einer Richtung quer zu den Modulpfetten können benachbarte Photovoltaikmodule einen Abstand d2 aufweisen. Dieser Abstand kann größer als 5 oder 7 oder 10 oder 15 cm sein. Er kann kleiner als 20 oder 15 cm sein. Der Abstand d2 kann auch mehr als 1 oder3 oder 5 oder 7 oder 10% der Länge I20 der Module sein. Er kann kleiner als 10 oder 7 oder 5% dieser Länge sein. Die Abstände d1 und d2 stellen die gleichmäßigere Bewässerung und Besonnung des Grunds unter den Photovoltaikmodulen 20 sicher.

Die Fig. 1, 2a und 6 zeigen ein Arrangement von 3*3 PV-Modulen 20. Es kann ein halbes Feld eines Gestells 1 auf der einen Seite der Trauflinie 22 in Fig. 1 einnehmen. Die Breite des Arrangements in Fig. 6 über alles nimmt dann die zweite Vierecksseite vs2 ein. Die Höhe des Arrangements in Fig. 6 über alles nimmt dann die halbe erste Vierecksseite vs1 ein. Es sind aber auch andere als 3*3-Arrangements von PV-Modulen möglich.

Die Länge der ersten Viereckseite vs1 quer zu First- und Traufrichtung und/oder der zweiten Viereckseite vs2 parallel zu First- und Traufrichtung kann über 5 oder 6 oder 7 oder 8 Metern liegen. Sie kann unter 15 oder 12 oder 10 oder 8 Metern liegen. Die Modulflächen können gegenüber der Horizontalen um einen Modulflächenwinkel µ von mehr als 5° oder 10° oder 20° angestellt sein. Der Modulflächenwinkel µ kann unter 30° oder 20° liegen. Er kann für alle Module gleich sein oder unterschiedlich.

Allgemein gesprochen kann die Dimensionierung der Aufständerung an die Abmessungen der PV-Module 20 angepasst sein oder umgekehrt. Abstände zwischen Pfosten 10 und/oder die Längen der verschiedenen Pfetten 11 - 14 können in beide Flächenrichtungen so gewählt sein, dass zwischen bzw. auf ihnen eine gegebene Anzahl von Modulen 20 mit Breite b20 und Länge I20 mit den jeweils gewünschten Abständen d1 und d2 dazwischen und ggf. Spalten am First und an der Traufe angebracht werden kann.

In ebenen Geländen ist für eine optimale Energieaufnahme eine Ausrichtung von Firstline 21 und Trauflinie 22 in Nord-Süd-Richtung bevorzugt. In geneigtem Gelände können Firstline 21 und Trauflinie 22 anders ausgerichtet sein. Sie können quer zur Gefällerichtung bzw. mittleren Gefällerichtung des Geländes liegen. Sie können auch bevorzugt entweder Nord-Süd ausgerichtet sein für Hangneigungen in südliche Richtung (z. b. 135° - 225°) oder Ost-West ausgerichtet sein für Hangneigungen in westliche oder östliche Richtung (z. b. < 135° oder > 225°).

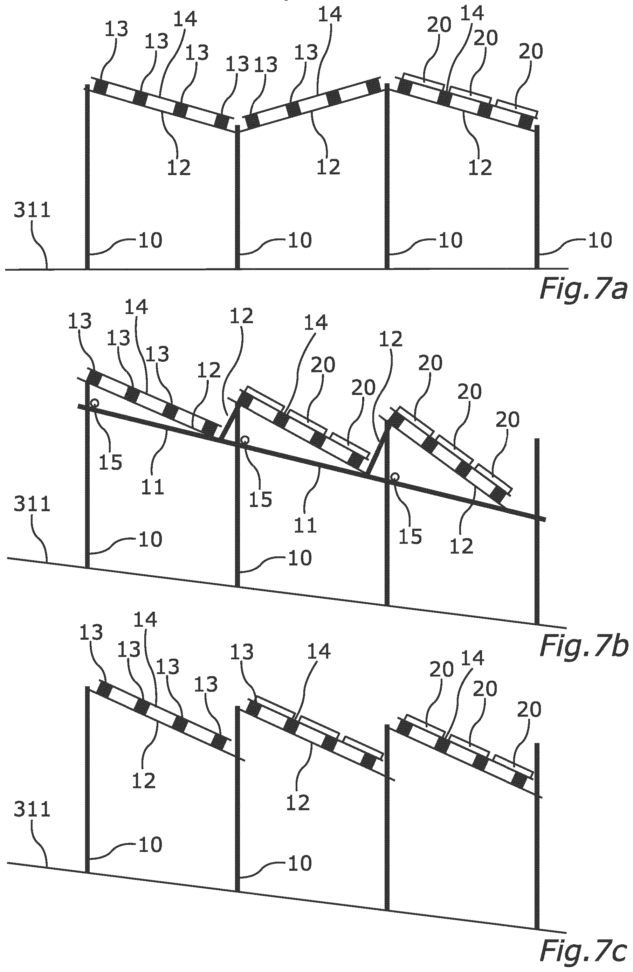

Die Figuren 7a bis 7c zeigen schematisch weitere mögliche Ausgestaltungen des Photovoltaikgestells. Sie werden als Abwandlung der bisher beschriebenen Konstruktion dargestellt. Die einzelnen Abwandlungen sind miteinander kombinierbar. Die Figuren zeigen der Übersichtlichkeit halber nur einige PV-Module 20. PV-Module können aber vollständiger als gezeigt und insbesondere wie schon beschrieben vorgesehen sein.

Fig. 7a zeigt eine Ausführungsform ohne Längspfetten 11. Die Schrägpfetten 12 sind mit beiden Enden direkt an den Pfosten 10 befestigt, z. B. an beiden Enden so, wie es für das obere Ende schon beschrieben ist, z. B. anhand von Fig. 5b. An jedem Pfosten 10 oben sind dann zwei in entgegengesetzte Richtung abgehende Schrägpfetten 12 befestigt. Die Pfosten 10 können dann in Richtung vs1 über dem Boden abwechselnd unterschiedliche Höhen und dementsprechend im Vergleich zueinander einen Höhenunterschied Dh haben. Er ergibt sich im ebenen Gelände aus dem Abstand vs1 zwischen den Pfosten 10 und dem gewünschten Modulflächenwinkel µ. Es gilt dann Dh = vs1*tan(µ). Er kann über 70 oder 100 oder 140 cm liegen. Über den Schrägpfetten 12 kann die Konstruktion wie beschrieben sein. Die Schrägpfetten 12 haben hier die Spannweite entsprechend den Abständen der Pfosten 12 und sind in ihrer Stabilität entsprechend auszulegen, etwa wie für die Längspfetten 11 beschrieben.

An einem erstem Pfosten 10-1 ist eine Schrägpfette 12-1, die mit ihrem jeweiligen oberen Ende am ersten Überstand ue1 des jeweiligen ersten Pfostens 10-1 befestigbar ist und von dort schräg nach unten auf den gegenüberliegenden ersten Pfosten 10-1 zu laufen kann und mit ihren unteren Enden daran anklemmbar ist, wobei die Anklemmungen zweier gegenüberliegender erster Schrägpfetten (12-1) an der Längspfette (11-1) einen Abstand haben können, der über 10 oder 20 oder 30 cm liegen kann und der unter 60 oder 40 cm liegen kann, und
Fig. 7b zeigt eine Ausführungsform mit abwechselnd in entgegengesetzte Richtung geneigten Schrägpfetten 12, die aber nicht symmetrisch, sondern abwechselnd lang und kurz, also unterschiedlich lang sind. Diese Konstruktion eignet sich z. B. für Hanglagen, vorzugsweise für überwiegend bzw. stark in Ostrichtung oder in Westrichtung abfallende Terrains. Die Konstruktion weist Längspfetten 11 auf, an denen die jeweils unteren Enden der langen und kurzen Schrägpfetten 12 angebracht sind, z. B. wie beschrieben, z. B. in Fig. 5c. Die Konstruktion über den langen Schrägpfetten 12 kann wie beschrieben sein. Die Konstruktion über den kurzen Schrägpfetten 12 kann qualitativ wie beschrieben sein. Sie kann aber eine geringere Zahl von PV-Modulen 20 tragen. Wenn die kurzen Schrägpfetten 12 sehr kurz bzw. steil sind, können sie auch ohne Überkonstruktion und ohne PV-Module vorgesehen sein. Sie dienen dann der mechanischen Stabilisierung der Konstruktion.

Die Schrägpfetten 12 führen zusammen mit den Pfosten 10 und ggf. den Längspfetten 11 zu einer Versteifung des Gestells gegenüber Querkräften, die in der Zeichnungsebene der Figuren 7a bis 7c horizontal wirken können, und gegenüber resultierenden Momenten. Fig. 7b deutet auch Diagonalstreben 15 an, die sich diagonal zwischen senkrecht zur Zeichnungsebene der Figur 7b beabstandeten Pfosten 10 erstrecken. Sie bewirken eine ähnliche Versteifung in der Richtung senkrecht zur Zeichnungsebene der Figuren 7b. Eine oder mehrere Diagonalstreben können zwischen benachbarten Pfosten so eingespannt werden, dass jeweils ihre zwei Enden an unterschiedlichen Höhen der benachbarten Pfosten 10 angebracht sind. Die benachbarten Pfosten 10 hier sind in Richtung senkrecht zur Zeichnungsebene der Figur 7b benachbart. Um die Durchfahrtshöhe nicht zu beeinträchtigen, kann das eine, untere Ende einer Diagonalstrebe 15 etwa auf Höhe einer Längspfette 11 oder auf Traufhöhe an einem Pfosten 10 befestigt sein, z. B. wie in Fig. 7b angedeutet knapp darunter. Am benachbarten Pfosten 10 kann das andere, obere Ende einer Diagonalstrebe 15 etwa auf Höhe des oberen Endes einer Diagonalpfette 12 Ende bzw. etwa auf Firsthöhe bzw. knapp darunter angebracht sein.

Die Diagonalstreben 15 können ein L-Profil oder ein eckiges C-Profil oder ein geschlossenes Rechteckprofil haben. Auch die Diagonalstrebe 15 kann aus Aluminium oder verzinktem Eisen oder Stahl gebaut sein oder es aufweisen. Die Befestigung kann mit Schrauben oder Klemmen erfolgen.

Fig. 7c zeigt eine Ausführungsform, bei der die Modulflächen nicht abwechselnd in entgegengesetzte Richtung geneigt sind, sondern alle in die gleiche Richtung. Die Konstruktion kann mit oder wie gezeigt ohne Längspfetten 11 vorgesehen sein. Die Schrägpfetten 12 können dann mit beiden Enden direkt an den Pfosten 10 befestigt sein, z. B. an beiden Enden so, wie es für das obere Ende schon beschrieben ist, z. B. anhand von Fig. 5b. Die Schrägpfetten 12 haben dann die Spannweite entsprechend den Abständen der Pfosten 12 und sind in ihrer Stabilität entsprechend auszulegen, etwa wie für die Längspfetten 11 beschrieben. Die Pfosten 10 können in etwa gleich lang sein und jeweils an unterschiedlichen Höhenpositionen mit zwei Enden zweier benachbarter Schrägpfetten verbunden sein, wie es schon beschrieben wurde. Über den Schrägpfetten 12 kann die Konstruktion wie beschrieben sein. Diese Konstruktion kann bei starken Hangneigungen gewählt werden.

Wenn ein Gelände eine Abwärtsneigung mit nördlicher Richtungskomponente hat, kann die Aufständerung gem. Fig. 7b oder 7c dahingehend geändert werden, dass die Module 20 gegen die Hangrichtung geneigt sind, also in südliche Richtung abwärts verlaufen. Die Firstrichtung kann dann Ost-West sein.

Soweit in dieser Beschreibung Norden und Süden unterschieden werden, kann dies insbesondere für die nördliche Hemisphäre gelten. Auf der südlichen Hemisphäre sind Nord und Süd vertauscht.

Die in dieser Beschreibung und den Ansprüchen beschriebenen oder in einer Abbildung dargestellten Merkmale sollen auch dann als untereinander kombinierbar gelten, wenn ihre Kombination nicht ausdrücklich beschrieben ist, soweit die Kombination technisch möglich ist. Merkmale, die in einem bestimmten Kontext, einer bestimmten Ausführungsform, Figur oder einem bestimmten Anspruch beschrieben werden, sollen auch als von diesem Anspruch, Kontext, Ausführungsform oder Figur trennbar und als mit jeder anderen Figur, Anspruch, Ausführungsform oder Kontext kombinierbar angesehen werden, soweit dies technisch möglich ist. Ausführungsformen und Figuren sollen nicht als notwendigerweise ausschließlich gegeneinander verstanden werden. Beschreibungen eines Verfahrens oder eines Ablaufs oder eines Verfahrensschrittes oder eines Ablaufschrittes sind auch als Beschreibung von Einrichtungen, die für die Implementierung des Verfahrens oder des Ablaufs oder des Verfahrensschrittes oder des Ablaufschrittes geeignet sind, und/oder sind auch als Beschreibung eines Artefakts zu verstehen, das mit dem Verfahrens oder Ablauf oder Verfahrensschritt oder Ablaufschritt erzeugt oder bearbeitet wurde, und umgekehrt. In der vorliegenden Beschreibung wird der Begriff "Erfindung" als die subjektiv vom Erfinder entwickelte Lehre verstanden.

### Bezugszeichenliste

- 1: Photovoltaikgestell
- 10: Pfosten
- 11: Längspfette
- 12: Schrägpfette
- 13: Querpfette
- 14: Modulpfette
- 20: Photovoltaikmodul
- 21: Firstlinie
- 22: Trauflinie
- 23: Modulrand
- 41: Schraubenleiste
- 42: Klemmkörper
- 43: Haltekörper
- 44: Doppelklemme
- 44-1: Montagehaken
- 45,46: Abstandshalter
- 47: Modulklammer
- 101: Pfostenprofil
- 111: Längspfettenprofil
- 121: Schrägpfettenprofil
- 141: Modulpfettenprofil
- 311: Boden
- 312: Bohrungen
- 315, 316: Bohrungen
- 317,318: Leisten
- 319: Schrägverstrebungen
- 320: Endbereich
- 411: Stifte
- 412: Stift
- 413: Stifte
- 431: nachgiebiges Material
- 432: Mutter
- 441: erste Klemmkammer
- 442: zweite Klemmkammer
- 443: Mutter
- 444: Hakenbereich
- 445: Haltebereich
- 446: Unterfangbereich
- 447: Anlagebereich
- 471: Schenkel
- 472: Klaue
- 473: Schraube
- 474: Ausnehmung
- 1000: PV-Anlage

## Patentansprüche

1. Photovoltaikgestell (1) mit
vier in einem Viereck aufzustellenden vertikal verlaufende ersten Pfosten (10-1), deren oberes Ende jeweils mindestens drei oder dreieinhalb Meter über dem Erdboden liegt, wobei das Viereck zwei gegenüberliegende erste Viereckseiten mit ersten Längen von jeweils über vier oder 5 oder sechs Metern hat, wobei die andern zwei Viereckseiten zweite Viereckseiten mit zweiten Längen von jeweils über zwei oder drei oder vier Metern sind,
zwei ersten Längspfetten (11-1), die sich jeweils zwischen den die ersten Viereckseiten absteckenden ersten Pfosten (10-1) erstrecken sollen und mit ihren jeweiligen Endbereichen derart an ihnen festklemmbar sind, dass die ersten Pfosten (10-1) nach oben über die jeweilige Längspfette (11-1) hinaus einen ersten Überstand (ue1) von mindestens 20 oder 30 oder 40 cm aufweisen können und dass die Enden der ersten Längspfetten (11-1) über den jeweiligen ersten Pfosten (10-1) hinaus einen zweiten Überstand (ue2) von mindestens 10 cm haben können,
pro erstem Pfosten (10-1) je einer daran befestigbare erste Schrägpfette (12-1), die mit ihrem jeweiligen oberen Ende am ersten Überstand (ue1) des jeweiligen ersten Pfostens (10-1) befestigbar ist und von dort schräg nach unten auf den gegenüberliegenden ersten Pfosten (10-1) und die jeweilige Längspfette (11-1) zu laufen kann und mit ihren unteren Enden daran anklemmbar ist, wobei die Anklemmungen zweier gegenüberliegender erster Schrägpfetten (12-1) an der Längspfette (11-1) einen Abstand haben können, der über 10 oder 20 oder 30 cm liegen kann und der unter 60 oder 40 cm liegen kann, und
zwei Paaren von ersten Querpfetten (13-1), von denen je zwei eines Paares mit ihren zwei Endbereichen an je zwei sich längs der zweiten Viereckseite betrachtet gegenüberliegenden ersten Schrägpfetten (12-1) so anklemmbar sind, dass sie an beiden Enden einen dritten Überstand (ue3) von jeweils mindestens 10 oder 20 cm über die jeweilige erste Schrägpfette (12-1) haben können und voneinander in Richtung der jeweiligen ersten Schrägpfetten (12-1) um mindestens 50 oder 70% der Länge der jeweiligen ersten Schrägpfette (12-1) beabstandet sind.

2. Photovoltaikgestell (1) nach Anspruch 1, mit
zwei zweiten Pfosten (10-2), die voneinander in Richtung der ersten Viereckseiten gemäß einer ersten Länge beabstandet und von zwei in Richtung der ersten Viereckseiten beabstandeten ersten oder zweiten Pfosten (10-2) in Richtung der zweiten Viereckseiten gemäß einer zweiten Länge beabstandet so aufstellbar sind, dass ihr oberes Ende jeweils mindestens drei oder dreieinhalb Meter über dem Erdboden liegt,
einer an die zweiten Pfosten (10-2) so anklemmbaren zweiten Längspfette (11-2), dass die zweiten Pfosten (10-2) nach oben über die zweite Längspfette (11-2) hinaus einen ersten Überstand (ue1) von mindestens 20 oder 30 oder 40 cm aufweisen können und dass die Enden der zweiten Längspfette (11-2) über den jeweiligen zweiten Pfosten (10-2) hinaus einen zweiten Überstand (ue2) von mindestens 10 cm haben können,
je einer mit ihrem jeweiligen oberen Ende am ersten Überstand (ue1) eines zweiten Pfostens (10-2) befestigbaren zweiten Schrägpfette (12-2), die von dort schräg nach unten auf den gegenüberliegenden zweiten Pfosten (10-2) und die jeweilige Längspfette (11-2) zu laufen kann und mit ihren unteren Enden daran anklemmbar ist, wobei die Anklemmungen zweier längs der zweiten Längspfette (11-2) gegenüberliegender Schrägpfetten (12-2) einen Abstand haben können, der über 10 oder 20 oder 30 cm liegen kann und der unter 60 oder 40 cm liegen kann, und
zwei Paaren von zweiten Querpfetten (13-2), von denen je zwei eines Paares mit ihren zwei Enden an je zwei sich längs der zweiten Viereckseite betrachtet gegenüberliegenden Paaren aus Schrägpfette (12) so anklemmbar sind, dass sie an beiden Enden einen dritten Überstand (ue3) von jeweils mindestens 10 oder 20 cm über die jeweilige Schrägpfette (12) haben können und voneinander in Richtung der jeweiligen Schrägpfetten (12) um mindestens 50 oder 70% der Länge der ersten oder zweiten Schrägpfette (12) beabstandet sind.

3. Photovoltaikgestell (1) nach Anspruch 1 oder 2, mit
zwei dritten Pfosten (10-3), die voneinander in Richtung der zweiten Viereckseiten gemäß einer zweiten Länge beabstandet und von zwei in Richtung der zweiten Viereckseiten beabstandeten ersten oder zweiten oder dritten Pfosten (10) in Richtung der ersten Viereckseiten gemäß einer ersten Länge beabstandet so aufstellbar sind, dass ihr oberes Ende jeweils mindestens drei oder dreieinhalb Meter über dem Erdboden liegt,
je einer an einen dritten Pfosten (10-3) so anklemmbaren dritten Längspfette (11-3), dass die dritten Pfosten (10-3) nach oben über die jeweilige dritte Längspfette (11-3) hinaus einen ersten Überstand (ue1) von mindestens 20 oder 30 oder 40 cm aufweisen können und dass das jeweils angeklemmte Ende der dritten Längspfette (11-3) über den jeweiligen dritten Pfosten (10-3) hinaus einen zweiten Überstand (ue2) von mindestens 10 cm haben kann, wobei das jeweils andere Enden der dritten Längspfette (11-3) an einem längs der ersten Viereckseite beabstandet gegenüberliegenden ersten oder zweiten oder dritten Pfosten (10) so anklemmbar ist, dass Pfosten (10) und Längspfette (11) einen ersten bzw. zweiten Überstand (ue1, ue2) aufweisen,
je einer am jeweiligen ersten Überstand (ue1) jedes dritten Pfostens (10-3) und am längs der dritten Längspfette (11-3) gegenüberliegenden Pfosten (10) befestigbaren dritten Schrägpfette (12-3), die vom ersten Überstand (ue1) des jeweiligen Pfostens (10) schräg nach unten auf den gegenüberliegenden Pfosten (10) und die jeweilige dritte Längspfette (11-3) zu laufen können und mit ihren unteren Enden daran anklemmbar sind, wobei die Anklemmungen zweier gegenüberliegender dritter Schrägpfetten (12-3) an der dritten Längspfette (11-3) einen Abstand haben können, der über 10 oder 20 oder 30 cm liegen kann und der unter 60 oder 40 cm liegen kann, und
zwei Paaren von dritten Querpfetten (13-3), von denen je zwei eines Paares mit ihren zwei Enden an je zwei sich längs der zweiten Viereckseite betrachtet gegenüberliegenden Paaren dritter Schrägpfette (12-3) parallel zueinander so anklemmbar sind, dass sie an beiden Enden einen dritten Überstand (ue3) von jeweils mindestens 10 oder 20 cm über die jeweilige dritte Schrägpfette (12-3) haben können und voneinander in Richtung der jeweiligen dritten Schrägpfetten (12-3) um mindestens 50 oder 70% der Länge der jeweiligen dritten Schrägpfette (12-3) beabstandet sind.

4. Photovoltaikgestell (1) nach einem der vorherigen Ansprüche, bei dem auf jedem Paar von Querpfetten (13) quer dazu ein oder mehrere Paare von Modulpfetten (14) parallel zueinander so anklemmbar sind, dass die Modulpfetten (14) in Richtung der Querpfetten (13) voneinander beabstandet sind.

5. Photovoltaikgestell (1) nach einem der vorherigen Ansprüche, bei dem die Pfosten (10) in einem in Draufsicht rechtwinkligen Raster aufstellbar sind, in dem die Rechtecke Seitenlängen der ersten Länge und der zweiten Länge haben.

6. Photovoltaikgestell (1) nach einem der vorherigen Ansprüche, bei dem die Pfosten (10) mit einer Länge von mindestens 50 oder 100 oder 150 cm in den Boden einrammbar sind.

7. Photovoltaikgestell (1) nach einem der vorherigen Ansprüche, bei dem die Dimensionierung insbesondere der Schrägpfetten (12) so ist, dass über ihnen in ihrem Bereich zwischen dem ersten Überstand (ue1) und ihrer Anklemmung an der jeweiligen Längspfette (11-1) zwei oder drei oder mehr Photovoltaikmodule (20) mit einem Abstand (d1) voneinander in Richtung der Schrägpfette (12-1) von mehr als zwei oder 5 oder 10 Zentimetern anklemmbar sind.

8. Photovoltaikgestell (1) nach einem der vorherigen Ansprüche, bei dem die Dimensionierung insbesondere der Querpfetten (13) so ist, dass über ihnen in ihrem Bereich zwischen den sie tragenden Schrägpfetten (12) zwei oder drei oder mehr Photovoltaikmodule mit einem Abstand (d2) voneinander in Richtung der Querpfette (13) von mehr als zwei oder 5 oder 10 Zentimetern anklemmbar sind.

9. Photovoltaikgestell (1) nach einem der vorherigen Ansprüche, bei dem die Pfosten (10) offene Viereckprofile vorzugsweise aus Metall und vorzugsweise mit einem fehlenden Eckbereich aufweisen, wobei das Viereck ein Rechteck oder Quadrat mit Seitenlänge von mehr als 5 oder sieben oder 10 oder 15 Zentimetern und vorzugsweise weniger als 20 oder 15 Zentimetern Seitenlänge sein kann, und wobei das Profil am im Verbau oberen Ende an gegenüberliegenden Seiten Bohrungen (312) für das Anbringen von Längspfetten (11) und Schrägpfetten (12) aufweist, wobei die Bohrungen einem Raster folgend in Längsrichtung des Pfostens (10) beabstandet vorgesehen sein können.

10. Photovoltaikgestell (1) nach einem der vorherigen Ansprüche, mit einer Schraubenleiste (41) mit einem länglichen Leistenkörper (410), von dem in deren Längsrichtung beabstandet zwei mindestens an ihrem Ende mit Gewinde versehene Stifte (411) abstehen, deren Abstand größer als die Höhe (h11) des Profils einer Längspfette (11) und deren Länge länger als die Breite (b11) des Profils einer Längspfette (11) ist und die von innen in das Profil eines Pfostens (10) so einlegbar ist, dass die Stifte (411) durch die im Raster vorgesehenen Bohrungen (312) ragen können, wobei die Schraubenleiste (41) einen weiter beabstandeten dritten mit mindestens an seinem Ende mit einem Gewinde versehenen Stift (412) aufweisen kann, dessen Länge länger ist als die Breite (b12) des Profils einer Schrägpfette (12) und der ebenfalls durch eine im Raster vorgesehenen Bohrung eines Pfostens (10) ragen kann.

11. Photovoltaikgestell (1) nach einem der vorherigen Ansprüche, bei dem eine Längspfette (11) und/oder eine Schrägpfette (12) ein Rechteckprofil mit einer Breite (b11, b12) und einer größeren Höhe (h11, h12) vorzugsweise aus Metall aufweisen, wobei die Breite über zwei oder 5 oder sieben Zentimetern liegen kann und wobei die Höhe mehr als das 1.2- oder 1.5- oder 2-fache der Breite sein kann.

12. Photovoltaikgestell (1) nach einem der vorherigen Ansprüche, bei dem eine Querpfette (13) zwei beabstandete und untereinander vorzugsweise mehrfach vorzugsweise diagonal verstrebte Leisten (317, 318) aufweist, wobei der Abstand (a13) der Leisten (317, 318) voneinander der Höhe (h12) des Profils einer Schrägpfette (12) entspricht und der von Verstrebungen (319) eingenommene Bereich der Querpfette (13) kleiner ist als der Abstand zweier benachbarter Schrägpfetten (12), wobei die Leisten (317, 318) Profilleisten vorzugsweise aus Metall aufweisen können.

13. Photovoltaikgestell (1) nach einem der vorherigen Ansprüche, mit Doppelklammern (44) jeweils mit einer ersten U-profilierten Klemmkammer (441), die mit ihren Schenkeln in Montageorientierung von der Seite her um das Profil einer Querpfette (13) herumgreifen kann, und mit einer rechtwinklig dazu stehenden zweiten U-profilierten Klemmkammer (442), die mit ihren Schenkeln in Montageorientierung von oben auf das Profil einer Schrägfette (12) aufsetzbar und daran befestigbar ist, insbesondere anschraubbar oder anklemmbar.

14. Agro-Photovoltaikanlage (1000) mit
einem Photovoltaikgestell (1) nach einem der vorherigen Ansprüche,
über jedem Paar von Querpfetten (13-1) mehrere Photovoltaik-Module (20), die mit einem Abstand voneinander von mehr als zwei oder 5 oder 10 Zentimetern angebracht sind, wobei die Photovoltaik-Module (20) an Modulpfette (14) nach Anspruch 4 befestigt sein können, die auf Querpfetten (13-1) aufliegen können.

15. Agro-Photovoltaikanlage (1000) nach Anspruch 14, deren Firstlinie um nicht mehr als 20 oder 10 oder 5 oder 2° gegen die Nord-Süd-Richtung oder die Ost-WestRichtung oder eine Richtung quer zur Hangrichtung verdreht ist.
